# EUROPEAN PATENT SPECIFICATION

(11) **EP 4 564 211 B1**
(45) Date of publication and mention of the grant of the patent: **25.11.2026**
(21) Application number: 23856424.9
(22) Date of filing: 01.08.2023
(51) Int. Cl.: G06F 21/60, G06F 9/54, G06F 21/62

(54) **AUTHENTICATION METHOD, DEVICE AND SYSTEM, AND STORAGE MEDIUM**
AUTHENTIFIZIERUNGSVERFAHREN, -VORRICHTUNG UND -SYSTEM SOWIE SPEICHERMEDIUM
PROCÉDÉ, DISPOSITIF ET SYSTÈME D'AUTHENTIFICATION, ET SUPPORT DE STOCKAGE

(30) Priority: 22.08.2022 CN 202211009165
(43) Date of publication of application: 04.06.2025
(73) Proprietor: Huawei Cloud Computing Technologies Co., Ltd., Guiyang, Guizhou, 550025 (CN)
(72) Inventor: HUANG, Shuang, Guiyang, Guizhou 550025 (CN)
(74) Representative: Isarpatent
(86) International application number: PCT/CN2023/110630
(87) International publication number: WO 2024/041334

(56) References cited:
- CN-A- 107 659 542
- CN-A- 109 510 849
- CN-A- 112 948 842
- US-A1- 2005 262 132
- US-A1- 2013 239 171
- US-A1- 2015 249 682
- US-A1- 2020 159 952

## Description

### TECHNICAL FIELD

This application relates to the communication field, and in particular, to an authentication method, apparatus, and system, and a storage medium.

### BACKGROUND

A database system with decoupled storage and compute includes a data access engine and a data storage system. The data storage system is configured to store data. The data access engine includes a plurality of data access units. For any data access unit, the data access unit receives a data access request from a user, performs authentication on permission of the user to access the data storage system, and accesses the data storage system based on the data access request after the authentication succeeds.

For any two data access units, the two data access units may receive a same data access request sent by a same user, but results of authentication performed by the two data access units on permission of the user to access the data storage system may be different, resulting in an authentication conflict.

US 2013/239171 A1 describes a distributed security architecture may include: a mobile anti-tamper hardware policy enforcement point configured to control communication behaviors of a mobile or stationary client by enforcing communication policies within a policy decision point; an anti-tamper hardware policy decision point encapsulated within the anti-tamper hardware policy enforcement point; a policy exchange channel for policy distribution modes configured to distribute and/or update communication and routing security policies to the client; a context manager configured to handle system-wide status change update signaling; and an authentication manager configured to provide clients with registration and credential/role assignments based on access policies. The distributed security architecture may be configured to provide open system interconnection layer 3.5 policy-based secure routing, and open system interconnection layer 2 policy-based mandatory access control address filtering to provide secure communication and computing for layers 4, 5, 6, and 7.

US 2020/159952 A1 describes a computer program product, method, and system for determining data to redact in an object. Event messages for objects are received. Each event message includes at least one facet, each facet for an instance of data in an object resulting from deep data inspection of the object that is used to determine whether the instance of data should be redacted. The event messages are added to a message queue. A determination is made of an event message in the message queue for an object having a facet for an instance of data that indicates the instance of data is to be redacted. Redaction is performed on the instance of data in the object in the determined event message having the facet indicating the instance of data is to be redacted data.

US 2015/249682 A1 describes a notification is received at a workload that indicates that a compliance policy update is available for the workload at a compliance policy management system. A synchronization manager on the workload pulls the compliance policy update from the compliance policy management system and deploys it to the workload.

### SUMMARY

An object of the present invention is to provide an authentication method, apparatus, and system, and a storage medium, to avoid an authentication conflict. Technical solutions are as follows. This object is solved by the subject-matter of the appended independent claims, wherein further embodiments are set out in the dependent claims.

According to a first aspect, this application provides an authentication method. In the method, a data access engine receives a first notification message, where the first notification message indicates that a permission policy platform generates a first permission policy, and the data access engine includes a plurality of data access units. The data access engine obtains the first permission policy based on the first notification message. The data access engine associates the first permission policy with the data access units in the data access engine, where the plurality of data access units include a first data access unit, and the first data access unit is configured to perform, based on a permission policy associated with the first data access unit, authentication on permission of a user to access a data storage system.

When the permission policy platform generates the first permission policy, the data access engine receives the first notification message, obtains the first permission policy based on the first notification message, and associates the first permission policy with the data access units in the data access engine, so that the data access units are associated with the same permission policy. In this way, when any two data access units receive a same data access request of a same user, the two data access units perform, according to the permission policy separately associated with the two data access units, authentication on permission of the user to access the data storage system, and obtain a same authentication result, avoiding an authentication conflict.

The permission policy platform includes a message queue, the message queue is used to store a first log generated when the permission policy platform generates the first permission policy, the first log is used to describe the first permission policy, the data access engine subscribes to the message queue, and the first notification message is a message sent, by the permission policy platform when the first log is stored in the message queue, to the data access engine that subscribes to the message queue.

The message queue provides a subscription and release function, and may be subscribed to by the data access engine, so that when storing the first log in the message queue, the permission policy platform sends the first notification message to the data access engine that subscribes to the message queue. The data access engine obtains the first permission policy based on the first notification message. In this way, when the permission policy platform generates the first permission policy, the data access engine obtains the first permission policy, improving timeliness.

In another possible implementation, the data access engine queries, based on the first notification message, the message queue for the first log whose log version is later than a latest log version obtained by the data access engine. The data access engine obtains the first permission policy based on the first log. The first log corresponding to the first permission policy can be accurately obtained by using the log version, the first permission policy is obtained based on the first log, and the first permission policy generated by the permission policy platform is accurately obtained.

In another possible implementation, permission policies associated with the data access units in the data access engine include a second permission policy, and the second permission policy is a permission policy generated by the permission policy platform. The data access engine receives a second notification message, where the second notification message indicates that the permission policy platform deletes the second permission policy. The data access engine dissociates the second permission policy from the data access units in the data access engine based on the second notification message.

When the permission policy platform deletes the second permission policy, the data access engine receives the second notification message, and dissociates the second permission policy from the data access units in the data access engine based on the second notification message, so that the data access units are associated with the same permission policy. In this way, when any two data access units receive a same data access request of a same user, the two data access units perform, according to the permission policy separately associated with the two data access units, authentication on permission of the user to access the data storage system, and obtain a same authentication result, avoiding an authentication conflict.

In another possible implementation, the first permission policy is a permission policy obtained by the permission policy platform by modifying a third permission policy, and the third permission policy is a permission policy generated by the permission policy platform; or the first permission policy is a new permission policy generated by the permission policy platform. In this way, when the permission policy platform generates a new permission policy or modifies a generated permission policy, the data access units are associated with the same permission policy.

According to a second aspect, this application provides an authentication method. In the method, a permission policy platform generates a first permission policy. The permission policy platform sends a first notification message, where the first notification message indicates that the permission policy platform generates the first permission policy, the first notification message is further used to trigger a data access engine to obtain the first permission policy and associate the first permission policy with data access units in the data access engine, the data access engine includes the plurality of data access units, the plurality of data access units include a first data access unit, and the first data access unit is configured to perform, based on a permission policy associated with the first data access unit, authentication on permission of a user to access a data storage system.

When the permission policy platform generates the first permission policy, the permission policy platform sends the first notification message, and the data access engine obtains the first permission policy based on the first notification message, and associates the first permission policy with the data access units in the data access engine, so that the data access units are associated with the same permission policy. In this way, when any two data access units receive a same data access request of a same user, the two data access units perform, according to the permission policy separately associated with the two data access units, authentication on permission of the user to access the data storage system, and obtain a same authentication result, avoiding an authentication conflict.

The permission policy platform includes a message queue, the message queue is used to store a first log generated when the permission policy platform generates the first permission policy, the first log is used to describe the first permission policy, and the data access engine subscribes to the message queue. When storing the first log in the message queue, the permission policy platform sends the first notification message to the data access engine that subscribes to the message queue.

The message queue provides a subscription and release function, and may be subscribed to by the data access engine, so that when storing the first log in the message queue, the permission policy platform sends the first notification message to the data access engine that subscribes to the message queue. The data access engine obtains the first permission policy based on the first notification message. In this way, when the permission policy platform generates the first permission policy, the data access engine obtains the first permission policy, improving timeliness.

In another possible implementation, the first notification message is used to trigger the data access engine to query the message queue for the first log whose log version is later than a latest log version obtained by the data access engine, and obtain the first permission policy based on the first log.

The first notification message is used to trigger the data access engine to obtain, by using the log version, the first log corresponding to the first permission policy, and obtain the first permission policy based on the first log, so that the data access engine can accurately obtain the first permission policy generated by the permission policy platform.

In another possible implementation, permission policies associated with the data access units in the data access engine include a second permission policy, and the second permission policy is a permission policy generated by the permission policy platform. The permission policy platform sends a second notification message after deleting the second permission policy, where the second notification message indicates that the permission policy platform deletes the second permission policy, and the second notification message is further used to trigger the data access engine to dissociate the second permission policy from the data access units in the data access engine.

When the permission policy platform deletes the second permission policy, the permission policy platform sends the second notification message, and the data access engine dissociates the second permission policy from the data access units in the data access engine based on the second notification message, so that the data access units are associated with the same permission policy. In this way, when any two data access units receive a same data access request of a same user, the two data access units perform, according to the permission policy separately associated with the two data access units, authentication on permission of the user to access the data storage system, and obtain a same authentication result, avoiding an authentication conflict.

In another possible implementation, the first permission policy is a permission policy obtained by the permission policy platform by modifying a third permission policy, and the third permission policy is a permission policy generated by the permission policy platform; or the first permission policy is a new permission policy generated by the permission policy platform. In this way, when the permission policy platform generates a new permission policy or modifies a generated permission policy, the data access units are associated with the same permission policy.

According to a third aspect, this application provides an authentication method. In the method, a permission policy platform generates a first permission policy. The permission policy platform sends a first notification message, where the first notification message indicates that the permission policy platform generates the first permission policy. A data access engine obtains the first permission policy based on the first notification message, where the data access engine includes a plurality of data access units. The data access engine associates the first permission policy with the data access units in the data access engine, where the plurality of data access units include a first data access unit, and the first data access unit is configured to perform, based on a permission policy associated with the first data access unit, authentication on permission of a user to access a data storage system.

When the permission policy platform generates the first permission policy, the permission policy platform sends the first notification message, and the data access engine obtains the first permission policy based on the first notification message, and associates the first permission policy with the data access units in the data access engine, so that the data access units are associated with the same permission policy. In this way, when any two data access units receive a same data access request of a same user, the two data access units perform, according to the permission policy separately associated with the two data access units, authentication on permission of the user to access the data storage system, and obtain a same authentication result, avoiding an authentication conflict.

The permission policy platform includes a message queue, the message queue is used to store a first log generated when the permission policy platform generates the first permission policy, the first log is used to describe the first permission policy, and the data access engine subscribes to the message queue. When storing the first log in the message queue, the permission policy platform sends the first notification message to the data access engine that subscribes to the message queue. The data access engine queries, based on the first notification message, the message queue for the first log whose log version is later than a latest log version obtained by the data access engine. The data access engine obtains the first permission policy based on the first log.

The message queue provides a subscription and release function, and may be subscribed to by the data access engine, so that when storing the first log in the message queue, the permission policy platform sends the first notification message to the data access engine that subscribes to the message queue. The data access engine obtains the first permission policy based on the first notification message. In this way, when the permission policy platform generates the first permission policy, the data access engine obtains the first permission policy, improving timeliness.

In another possible implementation, permission policies associated with the data access units in the data access engine include a second permission policy, and the second permission policy is a permission policy generated by the permission policy platform. The permission policy platform sends a second notification message when deleting the second permission policy, where the second notification message indicates that the permission policy platform deletes the second permission policy. The data access engine dissociates the second permission policy from the data access units in the data access engine based on the second notification message.

When the permission policy platform deletes the second permission policy, the permission policy platform sends the second notification message, and the data access engine dissociates the second permission policy from the data access units in the data access engine based on the second notification message, so that the data access units are associated with the same permission policy. In this way, when any two data access units receive a same data access request of a same user, the two data access units perform, according to the permission policy separately associated with the two data access units, authentication on permission of the user to access the data storage system, and obtain a same authentication result, avoiding an authentication conflict.

In another possible implementation, the first permission policy is a permission policy obtained by the permission policy platform by modifying a third permission policy, and the third permission policy is a permission policy generated by the permission policy platform; or the first permission policy is a new permission policy generated by the permission policy platform. In this way, when the permission policy platform generates a new permission policy or modifies a generated permission policy, the data access units are associated with the same permission policy.

According to a fourth aspect, this application provides an authentication apparatus, configured to perform the method according to any one of the first aspect or the possible implementations of the first aspect. Specifically, the apparatus includes units configured to perform the method according to any one of the first aspect or the possible implementations of the first aspect.

According to a fifth aspect, which is not covered by the claims, this application provides an authentication apparatus, configured to perform the method according to any one of the second aspect or the possible implementations of the second aspect. Specifically, the apparatus includes units configured to perform the method according to any one of the second aspect or the possible implementations of the second aspect.

According to a sixth aspect, which is not covered by the claims, this application provides a computing device cluster, including at least one computing device, where each computing device includes a processor and a memory, and the processor of the at least one computing device is configured to execute instructions stored in the memory of the at least one computing device, to enable the computing device cluster to perform the method according to any one of the first aspect or the possible implementations of the first aspect.

According to a seventh aspect, which is not covered by the claims, this application provides a computing device cluster, including at least one computing device, where each computing device includes a processor and a memory, and the processor of the at least one computing device is configured to execute instructions stored in the memory of the at least one computing device, to enable the computing device cluster to perform the method according to any one of the second aspect or the possible implementations of the second aspect.

According to an eighth aspect, which is not covered by the claims, this application provides a computer program product including instructions. When the instructions are run by a computing device cluster, the computing device cluster is enabled to perform the method according to any one of the first aspect, the second aspect, the possible implementations of the first aspect, or the possible implementations of the second aspect.

According to a ninth aspect, this application provides a computer-readable storage medium, configured to store a computer program. When the computer program is executed by a computing device cluster, the computing device cluster performs the method according to any one of the first aspect, the second aspect, the possible implementations of the first aspect, or the possible implementations of the second aspect.

According to a tenth aspect, which is not covered by the claims, this application provides a chip, including a memory and a processor. The memory is configured to store computer instructions, and the processor is configured to invoke the computer instructions from the memory and run the computer instructions, to perform the method according to any one of the first aspect, the second aspect, the possible implementations of the first aspect, or the possible implementations of the second aspect.

According to an eleventh aspect, which is not covered by the claims, this application provides an authentication system. The system includes the apparatus according to the fourth aspect and the apparatus according to the fifth aspect; or the system includes the computing device cluster according to the sixth aspect and the computing device cluster according to the seventh aspect.

### BRIEF DESCRIPTION OF DRAWINGS

FIG. 1 is a diagram of a structure of a database system according to an embodiment of this application;
FIG. 2 is a diagram of a structure of another database system according to an embodiment of this application;
FIG. 3 is a diagram of a structure of another database system according to an embodiment of this application;
FIG. 4 is a flowchart of a method for associating a data access unit with a permission policy according to an embodiment of this application;
FIG. 5 is a flowchart of a method for dissociating a data access unit from a permission policy according to an embodiment of this application;
FIG. 6 is a flowchart of an authentication method according to an embodiment of this application;
FIG. 7 is a diagram of a structure of an authentication apparatus according to an embodiment of this application;
FIG. 8 is a diagram of a structure of another authentication apparatus according to an embodiment of this application;
FIG. 9 is a diagram of a structure of an authentication system according to an embodiment of this application;
FIG. 10 is a diagram of a structure of a computing device according to an embodiment of this application;
FIG. 11 is a diagram of a structure of a computing device cluster according to an embodiment of this application;
FIG. 12 is a diagram of a structure of another computing device cluster according to an embodiment of this application;
FIG. 13 is a diagram of a structure of another computing device according to an embodiment of this application;
FIG. 14 is a diagram of a structure of another computing device cluster according to an embodiment of this application; and
FIG. 15 is a diagram of a structure of another computing device cluster according to an embodiment of this application.

### DESCRIPTION OF EMBODIMENTS

The following further describes in detail embodiments of this application with reference to accompanying drawings.

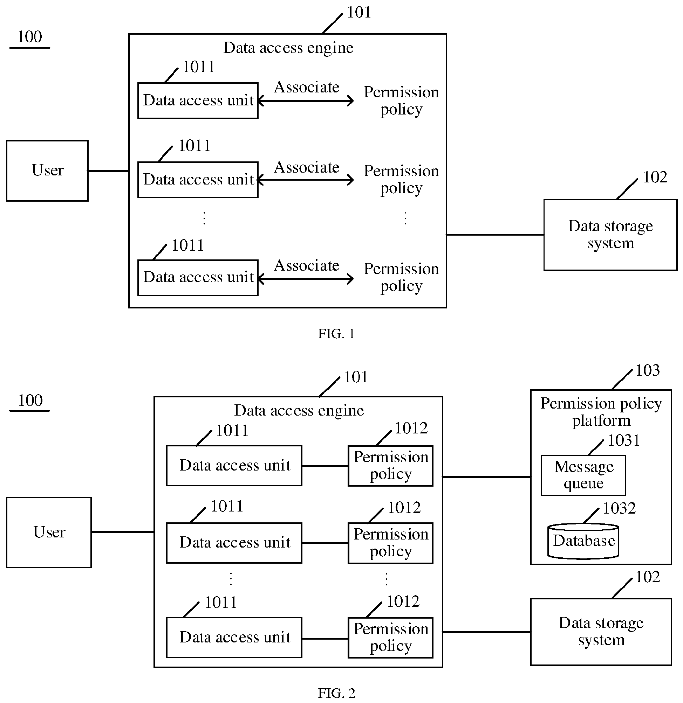

Refer to FIG. 1. A database system 100 with decoupled storage and compute includes a data access engine 101 and a data storage system 102, and the data access engine 101 communicates with the data storage system 102.

The data storage system 102 includes at least one data object, and each data object is configured to store data.

The data access engine 101 includes a plurality of data access units 1011, and each data access unit 1011 is associated with at least one permission policy.

The plurality of data access units 1011 include a first data access unit. The first data access unit is configured to: perform, based on a permission policy associated with the first data access unit, authentication on permission of a user to access the data storage system 102, and access the data storage system 102 after the authentication succeeds.

For any permission policy, the permission policy is used to perform authentication on permission of a user to access the data storage system 102. Optionally, the permission policy includes identification information of a data object, a user identity of a user that can access the data object, and an operation type of an access operation that can be used to access the data object.

The data object includes a data table, a file, and/or the like that are/is stored in the data storage system 102. For example, the data storage system 102 is an object file storage system, the object file storage system includes at least one file, and the object file storage system uses a file to store data. Therefore, a data object in the data storage system 102 is the file. For another example, the data storage system 102 includes at least one data table, and the data storage system 102 uses a data table to store data. Therefore, a data object in the data storage system 102 is the data table.

For any user, for ease of description, the user is referred to as a first user. The first user may send a data access request to the data access engine 101, where the data access request includes identification information of a to-be-accessed data object and a first operation type, the data access request is used to request to access the to-be-accessed data object in the data storage system 102 through a first access operation, and the first access operation is an access operation corresponding to a first operation type.

The data access engine 101 receives the data access request, obtains identification information of the first user, selects one data access unit from the plurality of data access units 1011 included in the data access engine 101 as the first data access unit, and submits the data access request and the identification information of the first user to the first data access unit.

The first data access unit performs, based on at least one permission policy associated with the first data access unit, the identification information of the first user, and the data access request, authentication on permission of the first user to access the to-be-accessed data object in the data storage system 102, and after the authentication succeeds, accesses the to-be-accessed data object in the data storage system 102 based on the data access request.

During implementation, the first data access unit selects, from the at least one permission policy associated with the first data access unit, a first permission policy including the identification information of the to-be-accessed data object, determines a user identity of the first user based on the identification information of the first user, compares a user identity included in the first permission policy with the user identity of the first user, and compares an operation type included in the first permission policy with the first operation type.

If the user identity included in the first permission policy is the same as the user identity of the first user and the operation type included in the first permission policy is the same as the first operation type, it is authenticated that the first user has permission to access the to-be-accessed data object in the data access system 102 through the first access operation. In other words, the permission is authenticated. The to-be-accessed data object in the data storage system 102 is accessed based on the identification information of the to-be-accessed data object through the first access operation corresponding to the first operation type.

If the user identity included in the first permission policy is different from the user identity of the first user and/or the operation type included in the first permission policy is different from the first operation type, it is authenticated that the first user has no permission to access the to-be-accessed data object in the data access system 102 through the first access operation. In other words, the permission is not authenticated, and access to the data storage system 102 is stopped.

In some embodiments, the data access request includes the identification information of the first user, and the data access engine 101 obtains the identification information of the first user from the data access request. Alternatively, a communication connection between the data access engine 101 and the first user is bound to the identification information of the first user, and the data access engine 101 receives the data access request via the communication connection, and obtains the identification information that is of the first user and that is bound to the communication connection.

In some embodiments, the data access engine 101 selects, in a load balancing manner, one data access unit from the plurality of data access units 1011 included in the data access engine 101 as the first data access unit.

For any two data access units in the data access engine 101, for ease of description, the two data access units are respectively referred to as a first data access unit and a second data access unit, and a permission policy associated with the first data access unit may be different from a permission policy associated with the second data access unit.

In some cases, the first user may send two same data access requests to the data access engine 101 at different time points, and the two data access requests are respectively a first data access request and a second data access request. When receiving the first data access request, the data access engine 101 may select the first data access unit, and submit the identification information of the first user and the first data access request to the first data access unit. When receiving the second data access request, the data access engine 101 may select the second data access unit, and submit the identification information of the first user and the second data access request to the second data access unit. The first data access unit performs, based on the at least one permission policy associated with the first data access unit, the identification information of the first user, and the first data access request, authentication on permission of the first user to access the data storage system 102, to obtain a first authentication result. The second data access unit performs, based on at least one permission policy associated with the second data access unit, the identification information of the first user, and the second data access request, authentication on permission of the first user to access the data storage system 102, to obtain a second authentication result.

The permission policy associated with the first data access unit may be different from the permission policy associated with the second data access unit. As a result, the first authentication result and the second authentication result may be different, and a conflict occurs between the two times of authentication.

For example, refer to Table 1. The at least one permission policy associated with the first data access unit includes a permission policy 1 and a permission policy 2. The permission policy 1 includes identification information "ObjectID 1" of a first data object, a user identity "User 1" of a user that can access the first data object, and an operation type "read" of an access operation that can be used to access the first data object. The permission policy 2 includes identification information "ObjectID 2" of a second data object, a user identity "User 2" of a user that can access the second data object, and an operation type "read" of an access operation that can be used to access the second data object.

**Table 1**

| Permission policy | Identification information of a data object | User identity | Operation type |
|---|---|---|---|
| Permission policy 1 | ObjectID 1 | User 1 | Read |
| Permission policy 2 | ObjectID 2 | User 2 | Read |

For example, refer to Table 2. The at least one permission policy associated with the second data access unit includes a permission policy 1 and a permission policy 3. The permission policy 3 includes identification information "ObjectID 2" of a second data object, a user identity "User 2" of a user that can access the second data object, and an operation type "write" of an access operation that can be used to access the second data object.

**Table 2**

| Permission policy | Identification information of a data object | User identity | Operation type |
|---|---|---|---|
| Permission policy 1 | ObjectID 1 | User 1 | Read |
| Permission policy 3 | ObjectID 2 | User 2 | Write |

It is assumed that the identification information of the first user is "UID 1", and the user identity of the first user is "User 2". The first user sends the first data access request and the second data access request to the data access engine 101 at different time points. The first data access request includes the identification information "ObjectID 2" of the to-be-accessed second data object and the first operation type "read". The second data access request includes the identification information "ObjectID 2" of the to-be-accessed second data object and the first operation type "read". Both the first data access request and the second data access request are used to request to read data stored in the second data object in the data storage system 102.

When receiving the first data access request, the data access engine 101 obtains the identification information "UID 1" of the first user, and selects one data access unit from the plurality of data access units 1011 included in the data access engine 101. Assuming that the first data access unit is selected, the identification information "UID 1" of the first user and the first data access request are submitted to the first data access unit. The first data access unit determines, based on the identification information "UID 1" of the first user, that the user identity of the first user is "User 2", and obtains, from the permission policy 1 and the permission policy 2 that are associated with the first data unit and that are shown in Table 1, the permission policy 2 that includes the identification information "ObjectID 2" of the second data object It is determined through comparison that the user identity "User 2" included in the permission policy 2 is the same as the user identity "User 2" of the first user, and it is determined through comparison that the first operation type "read" is the same as the operation type "read" included in the permission policy 2. The obtained first authentication result is that the first user has permission to read the data stored in the second data object in the data storage system 102.

When receiving the second data access request, the data access engine 101 obtains the identification information "UID 1" of the first user, and selects one data access unit from the plurality of data access units 1011 included in the data access engine 101. Assuming that the second data access unit is selected, the identification information "UID 1" of the first user and the second data access request are submitted to the second data access unit. The second data access unit determines, based on the identification information "UID 1" of the first user, that the user identity of the first user is "User 2", and obtains, from the permission policy 1 and the permission policy 3 that are associated with the second data unit and that are shown in Table 2, the permission policy 3 that includes the identification information "ObjectID 2" of the second data object. It is determined through comparison that the user identity "User 2" included in the permission policy 3 is the same as the user identity "User 2" of the first user, and it is determined through comparison that the first operation type "read" is different from the operation type "write" included in the permission policy 3. The obtained second authentication result is that the first user has no permission to read the data stored in the second data object in the data storage system 102.

The permission policy associated with the first data access unit is different from the permission policy associated with the second data access unit. As a result, the first authentication result of the authentication performed by the first data access unit is different from the second authentication result of the authentication performed by the second data access unit, and an authentication conflict occurs.

Refer to FIG. 2. The database system 100 further includes a permission policy platform 103, and the data access engine 101 further communicates with the permission policy platform 103.

The permission policy platform 103 is configured to generate a first permission policy, and send a first notification message to the data access engine 101; and
the data access engine 101 is configured to: receive the first notification message, obtain the first permission policy based on the first notification message, and associate the first permission policy with the data access units in the data access engine 101; and/or,
the permission policy platform 103 is configured to: delete a second permission policy, where the second permission policy is a permission policy generated by the permission policy platform 103; and send a second notification message to the data access engine 101, where permission policies associated with the data access units in the data access engine 101 include the second permission policy; and
the data access engine 101 is configured to: receive the second notification message, and dissociate the second permission policy from the data access units in the data access engine 101 based on the second notification message.

When the permission policy in the permission policy platform 103 changes (the first permission policy is generated or the second permission policy is deleted), the data access engine 101 receives the notification message sent by the permission policy platform 103, and uniformly updates, based on the notification message, the permission policy associated with the data access units in the data access engine 101, to ensure that the data access units in the data access engine 101 are associated with the same permission policy. In this way, when any two data access units receive a same data access request of a same user, it is ensured that results of authentication performed by the two data access units on permission of the user to access the data storage system 102 are the same, avoiding an authentication conflict.

In some embodiments, refer to FIG. 2. The data access engine 101 further includes a plurality of storage spaces 1012, and the plurality of storage spaces 1012 are in one-to-one correspondence with the plurality of data access units 1011. The storage space corresponding to the first data access unit is used to store at least one permission policy associated with the first data access unit.

In the data access engine 101, the first data access unit may be associated with the at least one permission policy in the following two implementations.

In the first implementation, the storage space 1012 corresponding to the first data access unit stores the at least one permission policy.

In the second implementation, the data access engine 101 includes a correspondence between the at least one permission policy and identification information of the first data access unit.

In some embodiments, refer to FIG. 2. The permission policy platform 103 includes a message queue 1031, the message queue 1031 provides a subscription and release function, and the data access engine 101 can subscribe to the message queue 1031. When content stored in the message queue 1031 changes, the permission policy platform 103 sends a notification message to the data access engine 101 that subscribes to the message queue 1031.

The permission policy platform 103 is configured to: generate a first log when generating the first permission policy, where the first log is used to describe the first permission policy; store the first log in the message queue 1031; and send the first notification message to the data access engine 101 that subscribes to the message queue 1031; and the data access engine 101 is configured to: query, after receiving the first notification message, the message queue 1031 for the first log, obtain the first permission policy based on the first log, and associate the first permission policy with the data access units in the data access engine 101; and/or,
the permission policy platform 103 is configured to: generate a second log when deleting the second permission policy, where the second log is used to describe the second permission policy; store the second log in the message queue 1031; and send the second notification message to the data access engine 101 that subscribes to the message queue 1031; and the data access engine 101 is configured to: query, after receiving the second notification message, the message queue 1031 for the second log, and dissociate the data access units in the data access engine 101 from the second permission policy based on the second log.

In some embodiments, refer to FIG. 2. The database system 100 further includes a database 1032. The database 1032 is configured to store a permission policy generated by the permission policy platform 103. Therefore, the permission policy platform 103 is further configured to store the first permission policy in the database 1032 when generating the first permission policy; and/or,
the database 1032 stores the second permission policy generated by the permission policy platform 103, and deleting the second permission policy by the permission policy platform 103 means deleting the second permission policy from the database 1032.

In some embodiments, the database 1032 may be located in the permission policy platform 103; or the database 1032 is located in a storage device, and the permission policy platform 103 communicates with the storage device.

The data access unit may be a process running in the data access engine 101, or the like. The user identity of the first user may be a user group to which the first user belongs, or the like. The database 1032 may be a relational database, or the like.

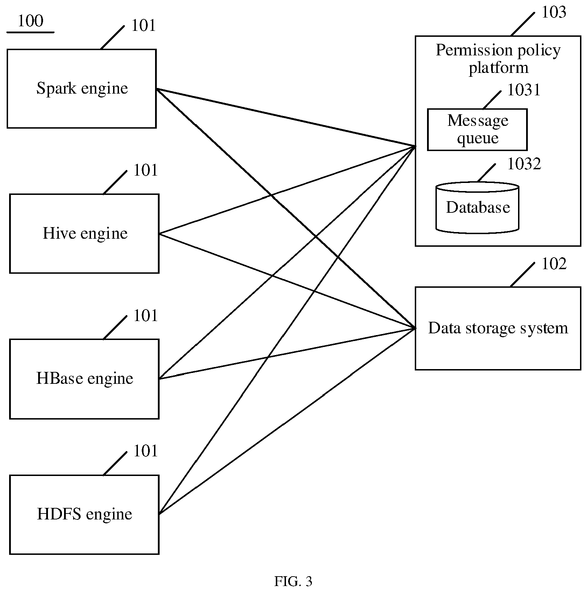

The database system 100 may include at least one data access engine 101. For example, refer to FIG. 3. The database system 100 includes at least one of the following data access engines 101: a Spark engine, a Hive engine, an HBase engine, a distributed file system (hadoop distributed file system, HDFS) engine, or the like. Optionally, the Spark engine is a fast and general-purpose computing engine designed for large-scale data processing, the Hive engine is a computing engine of a data warehouse infrastructure built on a distributed system infrastructure (Hadoop), and the HBase engine is a distributed and column-oriented computing engine of an open-source database.

In some embodiments, the permission policy platform 103 includes at least one message queue 1031, the at least one message queue 1031 is in one-to-one correspondence with the at least one data access engine 101, and any data access engine 101 subscribes to a message queue 1031 corresponding to the data access engine 101.

When generating a permission policy corresponding to a data access engine 101, the permission policy platform 103 stores, in a message queue 1031 corresponding to the data access engine 101, a log used to describe the permission policy; and/or, when deleting a permission policy corresponding to a data access engine 101, the permission policy platform 103 stores, in a message queue 1031 corresponding to the data access engine 101, a log used to describe the permission policy.

In some embodiments, the database 1032 is configured to store a correspondence between a permission policy and identification information of a data access engine. To be specific, each record in the correspondence includes identification information of a data access engine and at least one permission policy corresponding to the data access engine.

The data access engine 101 may be a computing device or a computing device cluster, the data storage system 102 may be a storage device or a storage device cluster, and the permission policy platform 103 may be a computing device or a computing device cluster.

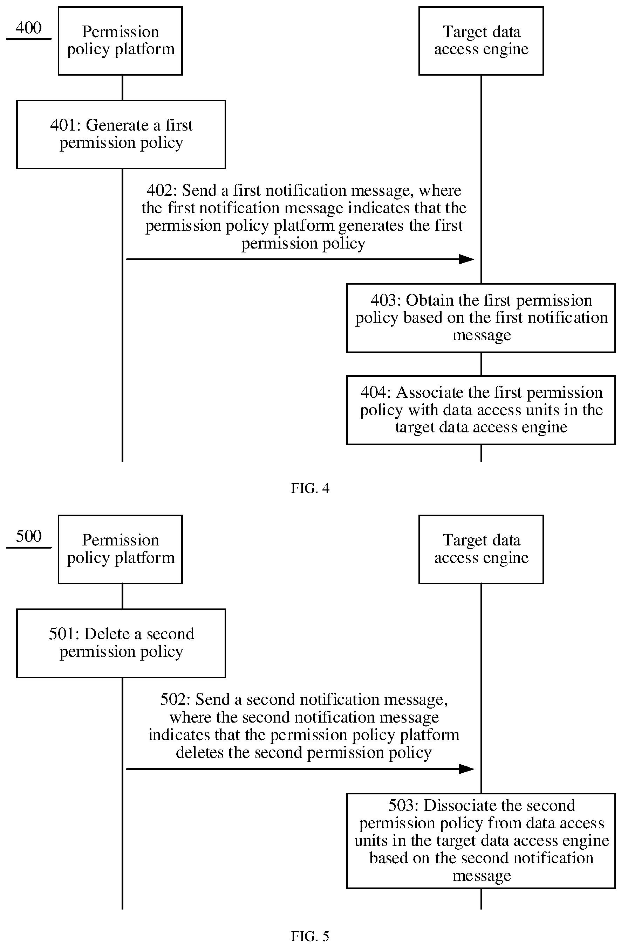

Refer to FIG. 4, an embodiment of this application provides a method 400 for associating a data access unit with a permission policy. The method 400 is applied to the database system 100 shown in FIG. 1, FIG. 2, or FIG. 3. In the method 400, a permission policy platform is configured to generate a first permission policy, and a data access engine is configured to associate the first permission policy with data access units in the data access engine. The method 400 includes a procedure including the following steps 401 to 404.

Step 401: The permission policy platform generates the first permission policy.

The first permission policy may be a new permission policy generated by the permission policy platform; or the first permission policy may be a permission policy obtained by the permission policy platform by modifying a third permission policy, and the third permission policy is a permission policy generated by the permission policy platform.

The permission policy platform may generate the first permission policy in the following two manners.

In the first manner, the permission policy platform displays a first interface to an administrator, and the administrator may configure content of the first permission policy in the first interface. The content includes identification information of a data object, a user identity that is allowed to access the data object, and an operation type of an access operation that is allowed to be used to access the data object. The permission policy platform obtains the content of the first permission policy from the first interface, that is, generates the first permission policy, and the first permission policy is the generated new permission policy.

In some embodiments, the permission policy platform further allocates identification information of the first permission policy, and the first permission policy further includes the identification information of the first permission policy.

In some embodiments, the permission policy platform further stores the first permission policy in a database.

In some embodiments, the administrator may configure identification information of a target data access engine in the first interface, where the target data access engine is a data access engine corresponding to the first permission policy. The permission policy platform may further obtain the identification information of the target data access engine from the first interface, and store a correspondence between the first permission policy in the database and the identification information of the target data access engine.

In the second manner, the permission policy platform obtains a generated permission policy, and displays a second interface to an administrator. The administrator may select a permission policy in the second interface. For ease of description, the selected permission policy is referred to as the third permission policy, and first content included in the third permission policy is modified into second content. The permission policy platform obtains the second content from the second interface, and replaces the first content included in the third permission policy with the second content, to obtain the first permission policy. In other words, the first permission policy is a permission policy obtained by modifying the third permission policy.

The third permission policy includes identification information of the third permission policy, identification information of a data object, a user identity that is allowed to access the data object, and an operation type of an access operation that is allowed to be used to access the data object. The administrator may modify content such as the user identity and/or the operation type in the third permission policy in the second interface.

In some embodiments, the permission policy platform obtains the generated permission policy from the database.

When the database is used to store a correspondence between a permission policy and identification information of a data access engine, a process of obtaining the generated permission policy is as follows.

The permission policy platform receives a modification request from the administrator, where the modification request includes the identification information of the target data access engine; obtains, from the database based on the identification information of the target data access engine, at least one permission policy corresponding to the target data access engine; and displays the second interface including the at least one permission policy.

When modifying the third permission policy into the first permission policy, the permission policy platform may further update the third permission policy stored in the database to the first permission policy. During implementation, the third permission policy whose identification information is the same as that of the first permission policy is obtained from the database, and the third permission policy is updated to the first permission policy. Alternatively,
the database is configured to store a correspondence between a permission policy and identification information of a data access engine. The permission policy platform obtains, from the database based on the identification information of the target data access engine, at least one permission policy corresponding to the target data access engine; obtains, from the at least one permission policy, the third permission policy whose identification information is the same as that of the first permission policy; and updates the third permission policy to the first permission policy.

Step 402: The permission policy platform sends a first notification message, where the first notification message indicates that the permission policy platform generates the first permission policy.

The permission policy platform includes a message queue, and the data access engine subscribes to the message queue. In step 402, the permission policy platform further generates a first log when generating the first permission policy, where the first log is used to describe the first permission policy; stores the first log in the message queue; determines the target data access engine that subscribes to the message queue; and sends the first notification message to the target data access engine.

The first permission policy is a permission policy corresponding to the target data access engine, and the operation of storing, by the permission policy platform, the first log in the message queue is as follows.

The permission policy platform obtains, based on the identification information of the target data access engine, the message queue that the target data access engine subscribes to, and stores the first log in the message queue that the target data access engine subscribes to.

In some embodiments, that the target data access engine subscribes to the message queue may be: Each data access unit in the target data access engine subscribes to the message queue.

That the permission policy platform sends the first notification message to the target data access engine may be: The permission policy platform sends the first notification message to each data access unit that is in the target data access engine and that subscribes to the message queue.

The first log includes a log version and the first permission policy. Optionally, the first log may further include a change type and/or the identification information of the first permission policy.

When the first permission policy is the new permission policy generated by the permission policy platform, the change type in the first log is addition. When the first permission policy is the permission policy obtained by the permission policy platform by modifying the third permission policy, the change type in the first log is modification.

For the log version of the first log, the permission policy platform obtains a generated latest log version, and adds the latest log version to obtain the log version of the first log.

In some embodiments, the permission policy platform further deletes, from the message queue, a log whose storage duration exceeds a specified time threshold.

Step 403: The target data access engine receives the first notification message, and obtains the first permission policy based on the first notification message.

In step 403, the target data access engine determines, based on the first notification message, the obtained latest log version, queries the message queue that the target data access engine subscribes to for the first log whose log version is later than the obtained latest log version, and obtains the first permission policy based on the first log.

In some embodiments, the first log includes the first permission policy, and the target data access engine obtains the first permission policy from the first log.

The target data access engine includes a plurality of data access units, and the plurality of data access units include a first data access unit. Step 403 may be performed by each data access unit in the target data access engine. For example, the first data access unit receives the first notification message, and determines the obtained latest log version based on the first notification message; queries the message queue that the first data access unit subscribes to for the first log whose log version is later than the obtained latest log version; and obtains the first permission policy from the first log.

Step 404: The target data access engine associates the first permission policy with the data access units in the target data access engine.

In step 404, the target data access engine includes the plurality of data access units, and the target data access engine associates the first permission policy with each data access unit in the target data access engine.

In some embodiments, the operation of associating, by the target data access engine, the first permission policy with each data access unit in the target data access engine is as follows.

When the change type included in the first log is addition, the target data access engine associates the first permission policy with each data access unit in the target data access engine. When the change type included in the first log is modification, the first permission policy is obtained by modifying the third permission policy, permission policies associated with each data access unit in the target data access engine include the third permission policy, the target data access engine replaces the third permission policy included in the permission policies associated with each data access unit with the first permission policy.

The plurality of data access units in the target data access engine include the first data access unit, and the first data access unit may be associated with the first permission policy in the following manner 1 and manner 2.

Manner 1: The target data access engine includes a storage space corresponding to the first data access unit. When the change type included in the first log is addition, the target data access engine stores the first permission policy in the storage space corresponding to the first data access unit. When the change type included in the first log is modification, the storage space corresponding to the first data access unit stores the third permission policy, the identification information of the first permission policy is the same as the identification information of the third permission policy, and the target data access engine obtains, based on the identification information of the first permission policy, the third permission policy from the storage space corresponding to the first data access unit, and replaces the third permission policy stored in the storage space corresponding to the first data access unit with the first permission policy.

In some embodiments, step 404 may be performed by each data access unit in the target data access engine. For example, the first data access unit obtains the first permission policy, and step 404 may be performed by the first data access unit.

During implementation: When the change type included in the first log is addition, the first data access unit stores the first permission policy in the storage space corresponding to the first data access unit. When the change type included in the first log is modification, the storage space corresponding to the first data access unit stores the third permission policy, and the identification information of the first permission policy is the same as the identification information of the third permission policy. The first data access unit obtains, based on the identification information of the first permission policy, the third permission policy from the storage space corresponding to the first data access unit, and replaces the third permission policy stored in the storage space corresponding to the first data access unit with the first permission policy. The other data access units are associated with the first permission policy in the same way as the first data access unit.

Manner 2: The target data access engine includes a correspondence between a permission policy and identification information of a data access unit. When the change type included in the first log is addition, the target data access engine correspondingly stores the first permission policy and the identification information of the first data access unit in the correspondence. When the change type included in the first log is modification, permission policies corresponding to the first data access unit in the correspondence include the third permission policy, and the identification information of the first permission policy is the same as the identification information of the third permission policy. The target data access engine obtains, based on the identification information of the first data access unit, at least one corresponding permission policy from the correspondence, obtains the third permission policy from the at least one permission policy based on the identification information of the first permission policy, and replaces the third permission policy with the first permission policy.

In some embodiments, step 404 may be performed by each data access unit in the target data access engine. For example, the first data access unit obtains the first permission policy, and step 404 may be performed by the first data access unit.

During implementation: When the change type included in the first log is addition, the first data access unit correspondingly stores the first permission policy and the identification information of the first data access unit in the correspondence. When the change type included in the first log is modification, the first data access unit obtains at least one corresponding permission policy from the correspondence based on the identification information of the first data access unit, obtains the third permission policy from the at least one permission policy based on the identification information of the first permission policy, and replaces the third permission policy with the first permission policy. The other data access units are associated with the first permission policy in the same way as the first data access unit.

In this embodiment of this application, when generating the first permission policy, the permission policy platform sends the first notification message to the data access engine. The data access engine receives the first notification message. The data access engine obtains the first permission policy based on the first notification message. The data access engine associates the first permission policy with each data access unit in the data access engine, so that the data access units are associated with the same permission policy. In this way, when any two data access units receive a same data access request of a same user, the two data access units perform, according to the permission policy separately associated with the two data access units, authentication on permission of the user to access the data storage system, and obtain a same authentication result, avoiding an authentication conflict.

Refer to FIG. 5, an embodiment of this application provides a method 500 for dissociating a data access unit from a permission policy. The method 500 is applied to the database system 100 shown in FIG. 1, FIG. 2, or FIG. 3. In the method 500, a permission policy platform is configured to delete a second permission policy, and a data access engine is configured to dissociate the second permission policy from data access units in the data access engine. The method 500 includes a procedure including the following steps 501 to 503.

Step 501: The permission policy platform deletes the second permission policy.

The second permission policy is a permission policy generated by the permission policy platform.

In step 501, the permission policy platform receives a deletion request sent by an administrator, where the deletion request includes identification information of the second permission policy; and deletes the second permission policy from a database based on the identification information of the second permission policy.

Step 502: The permission policy platform sends a second notification message, where the second notification message indicates that the permission policy platform deletes the second permission policy.

The permission policy platform includes a message queue, and the data access engine subscribes to the message queue. In step 502, the permission policy platform further generates a second log when deleting the second permission policy, where the second log is used to describe the second permission policy; stores the second log in the message queue; determines a target data access engine that subscribes to the message queue; and sends the second notification message to the target data access engine.

When the second permission policy is a permission policy corresponding to the target data access engine, the operation of storing, by the permission policy platform, the second log in the message queue is as follows.

The permission policy platform obtains, based on the identification information of the target data access engine, the message queue that the target data access engine subscribes to, and stores the second log in the message queue that the target data access engine subscribes to.

In some embodiments, that the target data access engine subscribes to the message queue may be: Each data access unit in the target data access engine subscribes to the message queue.

That the permission policy platform sends the second notification message to the target data access engine may be: The permission policy platform sends the second notification message to each data access unit that is in the target data access engine and that subscribes to the message queue.

The second log includes a log version and the identification information of the second permission policy. Optionally, the second log may further include a change type, and the change type is deletion.

For the log version of the second log, the permission policy platform obtains a generated latest log version, and adds the latest log version to obtain the log version of the second log.

Step 503: The target data access engine receives the second notification message, and dissociates the second permission policy from the data access units in the target data access engine based on the second notification message.

In step 503, the target data access engine determines, based on the second notification message, the obtained latest log version, queries the message queue that the target data access engine subscribes to for the second log whose log version is later than the obtained latest log version, and dissociates the second permission policy from the data access units in the target data access engine based on the second log.

In some embodiments, the second log includes the identification information of the second permission policy.

The target data access engine includes a plurality of data access units, and the operation in step 503 may be performed by the plurality of data access units. For example, the plurality of data access units include a first data access unit. The first data access unit receives the second notification message, and determines the obtained latest log version based on the second notification message; queries the message queue that the first data access unit subscribes to for the second log whose log version is later than the obtained latest log version; and dissociates the second permission policy from the data access units in the target data access engine based on the second log.

In step 503, the target data access engine includes the plurality of data access units, and the target data access engine dissociates the second permission policy from each data access unit in the target data access engine.

In some embodiments, the target data access engine may dissociate the second permission policy from each data access unit in the target data access engine in the following manner 1 and manner 2:
Manner 1: The target data access engine includes a storage space corresponding to the first data access unit, and the target data access engine deletes, based on the identification information of the second permission policy, the second permission policy from the storage space corresponding to the first data access unit.

In some embodiments, the operation in step 503 may be performed by the plurality of data access units, for example, may be performed by the first data access unit. The first data access unit obtains the identification information of the second permission policy, and deletes, based on the identification information of the second permission policy, the second permission policy from the storage space corresponding to the first data access unit. The other data access units delete the second permission policy in the same way as the first data access unit.

Manner 2: The target data access engine includes a correspondence between a permission policy and identification information of a data access unit. The target data access engine obtains at least one corresponding permission policy from the correspondence based on the identification information of the first data access unit, and deletes, based on the identification information of the second permission policy, the second permission policy from the at least one permission policy.

In some embodiments, the operation in step 503 may be performed by the plurality of data access units, for example, may be performed by the first data access unit. The first data access unit obtains the identification information of the second permission policy. The first data access unit obtains at least one corresponding permission policy from the correspondence based on the identification information of the first data access unit, and deletes the second permission policy from the at least one permission policy based on the identification information of the second permission policy. The other data access units delete the second permission policy in the same way as the first data access unit.

In this embodiment of this application, permission policies associated with the data access units in the data access engine include the second permission policy, and the second permission policy is a permission policy generated by the permission policy platform. The permission policy platform sends the second notification message when deleting the second permission policy. The data access engine receives the second notification message, and dissociates the second permission policy from the data access units in the data access engine based on the second notification message, so that the data access units are associated with the same permission policy. In this way, when any two data access units receive a same data access request of a same user, the two data access units perform, according to the permission policy separately associated with the two data access units, authentication on permission of the user to access the data storage system, and obtain a same authentication result, avoiding an authentication conflict.

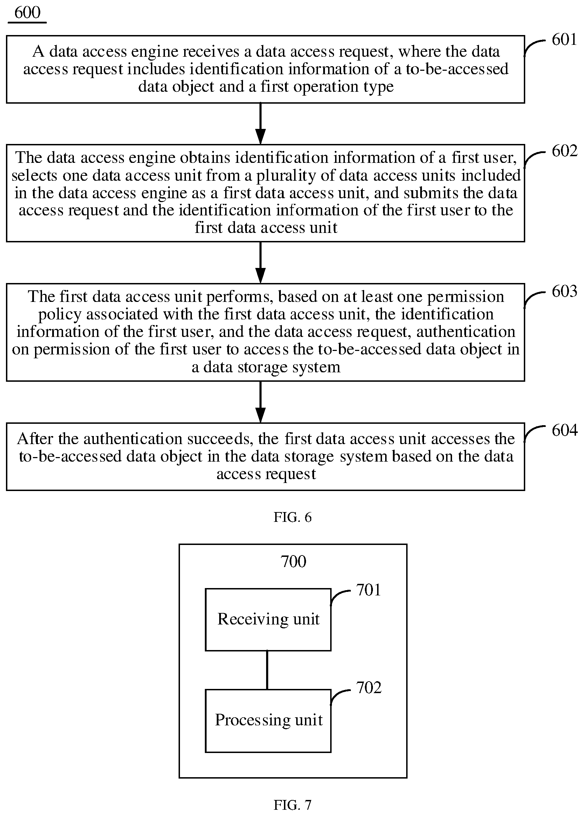

Refer to FIG. 6. An embodiment of this application provides an authentication method 600. The method 600 is applied to the data access engine in the database system 100 shown in FIG. 1, FIG. 2, or FIG. 3. The data access engine performs, by using a permission policy associated with a data access unit, authentication on permission of a user to access the data storage system. The permission policy associated with the data access unit is obtained by using the method 400 shown in FIG. 4 or the method 500 shown in FIG. 5. The method 600 includes a procedure including the following steps 601 to 604.

Step 601: The data access engine receives a data access request, where the data access request includes identification information of a to-be-accessed data object and a first operation type.

The data access engine receives the data access request sent by a first user, where the data access request includes the identification information of the to-be-accessed data object and the first operation type, the data access request is used to request to access the to-be-accessed data object in the data storage system through a first access operation, and the first access operation is an access operation corresponding to the first operation type.

In some embodiments, the data access request is a structured query language (structured query language, SQL) sentence sent by the first user.

Step 602: The data access engine obtains identification information of the first user, selects one data access unit from a plurality of data access units included in the data access engine as a first data access unit, and submits the data access request and the identification information of the first user to the first data access unit.

In step 602, the data access request includes the identification information of the first user, and the data access engine obtains the identification information of the first user from the data access request. Alternatively, a communication connection between the data access engine and the first user is bound to the identification information of the first user. When receiving the data access request via the communication connection, the data access engine obtains the identification information that is of the first user and that is bound to the communication connection. The data access engine selects, in a load balancing manner, one data access unit from the plurality of data access units included in the data access engine as the first data access unit.

Step 603: The first data access unit performs, based on at least one permission policy associated with the first data access unit, the identification information of the first user, and the data access request, authentication on permission of the first user to access the to-be-accessed data object in the data storage system.

In step 603, the first data access unit selects, from the at least one permission policy associated with the first data access unit, a first permission policy including the identification information of the to-be-accessed data object, determines a user identity of the first user based on the identification information of the first user, compares a user identity included in the first permission policy with the user identity of the first user, and compares an operation type included in the first permission policy with the first operation type.

If the user identity included in the first permission policy is the same as the user identity of the first user and the operation type included in the first permission policy is the same as the first operation type, it is authenticated that the first user has permission to access the to-be-accessed data object in the data access system through the first access operation. In other words, the permission is authenticated. The to-be-accessed data object in the data storage system is accessed based on the identification information of the to-be-accessed data object through the first access operation corresponding to the first operation type.

If the user identity included in the first permission policy is different from the user identity of the first user and/or the operation type included in the first permission policy is different from the first operation type, it is authenticated that the first user has no permission to access the to-be-accessed data object in the data access system through the first access operation. In other words, the permission is not authenticated.

Step 604: After the authentication succeeds, the first data access unit accesses the to-be-accessed data object in the data storage system based on the data access request.

In step 604, the data access request includes the identification information of the to-be-accessed data object and the first operation type. The first data access unit determines the first access operation corresponding to the first operation type, and accesses the to-be-accessed data object in the data storage system based on the identification information through the first access operation.

In this embodiment of this application, the first user may send a same data access request to the data access engine at different time points. Each time the data access engine receives the data access request, authentication is performed according to the procedure including steps 601 to 604. The data access units in the data access engine are associated with the same permission policy. In this way, when the procedure is executed, and data access requests received at different time points are allocated to different data access units, authentication results of the different data access units can also be the same, avoiding an authentication conflict.

Refer to FIG. 7. An embodiment of this application provides an authentication apparatus 700. The apparatus 700 is deployed in the data access engine in the database system 100 shown in FIG. 1, FIG. 2, or FIG. 3, or the apparatus 700 is deployed in the data access engine in the method 400 in FIG. 4, the method 500 in FIG. 5, or the method 600 in FIG. 6. The apparatus 700 includes:
a receiving unit 701, configured to receive a first notification message, where the first notification message indicates that a permission policy platform generates a first permission policy, and the apparatus 700 includes a plurality of data access units; and
a processing unit 702, configured to obtain the first permission policy based on the first notification message.

The processing unit 702 is further configured to associate the first permission policy with the data access units in the apparatus 700, where the plurality of data access units include a first data access unit, and the first data access unit is configured to perform, based on a permission policy associated with the first data access unit, authentication on permission of a user to access a data storage system.

Optionally, for a detailed implementation process in which the receiving unit 701 receives the first notification message, refer to the related content of step 403 of the method 400 shown in FIG. 4. Details are not described herein again.

Optionally, for a detailed implementation process in which the processing unit 702 obtains the first permission policy, refer to the related content of step 403 of the method 400 shown in FIG. 4. Details are not described herein again.

Optionally, for a detailed implementation process in which the processing unit 702 associates the first permission policy with the data access units in the apparatus 700, refer to the related content of step 404 in the method 400 shown in FIG. 4. Details are not described herein again.

Optionally, the permission policy platform includes a message queue, the message queue is used to store a first log generated when the permission policy platform generates the first permission policy, the first log is used to describe the first permission policy, the apparatus 700 subscribes to the message queue, and the first notification message is a message sent, by the permission policy platform when the first log is stored in the message queue, to the apparatus 700 that subscribes to the message queue.

Optionally, the processing unit 702 is configured to:
query, based on the first notification message, the message queue for the first log whose log version is later than a latest log version obtained by the apparatus 700; and
obtain the first permission policy based on the first log.

Optionally, for a detailed implementation process in which the processing unit 702 obtains the first log, refer to the related content of step 403 of the method 400 shown in FIG. 4. Details are not described herein again.

Optionally, for a detailed implementation process in which the processing unit 702 obtains the first permission policy, refer to the related content of step 403 of the method 400 shown in FIG. 4. Details are not described herein again.

Optionally, permission policies associated with the data access units in the apparatus 700 include a second permission policy, and the second permission policy is a permission policy generated by the permission policy platform;
the receiving unit 701 is further configured to receive a second notification message, where the second notification message indicates that the permission policy platform deletes the second permission policy; and
the processing unit 702 is further configured to dissociate the second permission policy from the data access units in the apparatus 700 based on the second notification message.

Optionally, for a detailed implementation process in which the receiving unit 701 receives the second notification message, refer to the related content of step 503 of the method 500 shown in FIG. 5. Details are not described herein again.

Optionally, for a detailed implementation process in which the processing unit 702 dissociates the second permission policy from the data access units in the apparatus 700, refer to the related content of step 503 in the method 500 shown in FIG. 5. Details are not described herein again.

Optionally, the first permission policy is a permission policy obtained by the permission policy platform by modifying a third permission policy, and the third permission policy is a permission policy generated by the permission policy platform; or the first permission policy is a new permission policy generated by the permission policy platform.

Both the receiving unit 701 and the processing unit 702 may be implemented by software, or may be implemented by hardware. For example, the following uses the processing unit 702 as an example to describe an implementation of the processing unit 702. Similarly, for an implementation of the receiving unit 701, refer to the implementation of the processing unit 702.

As an example of a software functional unit, the processing unit 702 may include code running on a computing instance. The computing instance may include at least one of a physical host (a computing device), a virtual machine, and a container. Further, there may be one or more computing instances. For example, the processing unit 702 may include code running on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

As an example of a hardware functional unit, the processing unit 702 may include at least one computing device like a server. Alternatively, the processing unit 702 may be a device implemented by using an application-specific integrated circuit (application-specific integrated circuit, ASIC) or a programmable logic device (programmable logic device, PLD), or the like. The PLD may be implemented by a complex programmable logic device (complex programmable logical device, CPLD), a field-programmable gate array (field-programmable gate array, FPGA), generic array logic (generic array logic, GAL), or any combination thereof.

The plurality of computing devices included in the processing unit 702 may be distributed in a same region, or may be distributed in different regions. The plurality of computing devices included in the processing unit 702 may be distributed in a same AZ, or may be distributed in different AZs. Similarly, the plurality of computing devices included in the processing unit 702 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the processing unit 702 may be configured to perform any step in the method provided in any one of the foregoing embodiments, and the receiving unit 701 may be configured to perform any step in the method provided in any one of the foregoing embodiments. Steps that the processing unit 702 and the receiving unit 701 are responsible for implementing may be specified as required, and the processing unit 702 and the receiving unit 701 respectively implement different steps in the method provided in any one of the foregoing embodiments, to implement all functions of the authentication apparatus 700.

In this embodiment of this application, the receiving unit receives the first notification message, where the first notification message indicates that the permission policy platform generates the first permission policy, and the apparatus includes the plurality of data access units. The processing unit obtains the first permission policy based on the first notification message. The processing unit associates the first permission policy with the data access units in the apparatus. In this way, when any two data access units receive a same data access request of a same user, the two data access units perform, according to the permission policy separately associated with the two data access units, authentication on permission of the user to access the data storage system, and obtain a same authentication result, avoiding an authentication conflict.

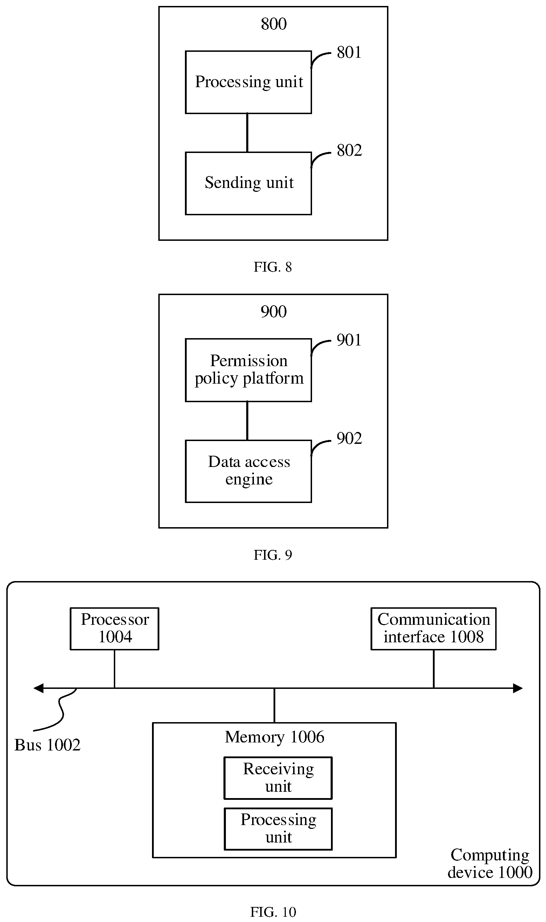

Refer to FIG. 8. An embodiment of this application provides an authentication apparatus 800. The apparatus 800 is deployed in the permission policy platform in the database system 100 shown in FIG. 1, FIG. 2, or FIG. 3, or the apparatus 800 is deployed in the permission policy platform in the method 400 in FIG. 4 or the method 500 in FIG. 5. The apparatus 800 includes:
a processing unit 801, configured to generate a first permission policy; and
a sending unit 802, configured to send a first notification message, where the first notification message indicates that the processing unit 801 generates the first permission policy, the first notification message is further used to trigger a data access engine to obtain the first permission policy and associate the first permission policy with data access units in the data access engine, the data access engine includes the plurality of data access units, the plurality of data access units include a first data access unit, and the first data access unit is configured to perform, based on a permission policy associated with the first data access unit, authentication on permission of a user to access a data storage system.

Optionally, for a detailed implementation process in which the processing unit 801 generates the first permission policy, refer to the related content of step 401 of the method 400 shown in FIG. 4. Details are not described herein again.

Optionally, for a detailed implementation process in which the sending unit 802 sends the first notification message, refer to the related content of step 402 of the method 400 shown in FIG. 4. Details are not described herein again.

Optionally, the apparatus 800 includes a message queue, the message queue is used to store a first log generated when the processing unit 801 generates the first permission policy, the first log is used to describe the first permission policy, and the data access engine subscribes to the message queue; and
the sending unit 802 is configured to send, when the first log is stored in the message queue, the first notification message to the data access engine that subscribes to the message queue.

Optionally, for a detailed implementation process in which the sending unit 802 sends the first notification message, refer to the related content of step 402 of the method 400 shown in FIG. 4. Details are not described herein again.

Optionally, the first notification message is used to trigger the data access engine to query the message queue for the first log whose log version is later than a latest log version obtained by the data access engine, and obtain the first permission policy based on the first log.

Optionally, permission policies associated with the data access units in the data access engine include a second permission policy, and the second permission policy is a permission policy generated by the processing unit 801; and
the sending unit 802 is further configured to send a second notification message after the processing unit 801 deletes the second permission policy, where the second notification message indicates that the processing unit 801 deletes the second permission policy, and the second notification message is further used to trigger the data access engine to dissociate the second permission policy from the data access units in the data access engine.

Optionally, for a detailed implementation process in which the sending unit 802 sends the second notification message, refer to the related content of step 502 of the method 500 shown in FIG. 5. Details are not described herein again.

Optionally, the first permission policy is a permission policy obtained by the processing unit 801 by modifying a third permission policy, and the third permission policy is a permission policy generated by the processing unit 801; or the first permission policy is a new permission policy generated by the processing unit 801.

Both the processing unit 801 and the sending unit 802 may be implemented by software, or may be implemented by hardware. For example, the following uses the processing unit 801 as an example to describe an implementation of the processing unit 801. Similarly, for an implementation of the sending unit 802, refer to the implementation of the processing unit 801.

As an example of a software functional unit, the processing unit 801 may include code running on a computing instance. The computing instance may include at least one of a physical host (a computing device), a virtual machine, and a container. Further, there may be one or more computing instances. For example, the processing unit 801 may include code running on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

As an example of a hardware functional unit, the processing unit 801 may include at least one computing device like a server. Alternatively, the processing unit 801 may be a device implemented by using an application-specific integrated circuit (application-specific integrated circuit, ASIC) or a programmable logic device (programmable logic device, PLD), or the like. The PLD may be implemented by a complex programmable logic device (complex programmable logical device, CPLD), a field-programmable gate array (field-programmable gate array, FPGA), generic array logic (generic array logic, GAL), or any combination thereof.

The plurality of computing devices included in the processing unit 801 may be distributed in a same region, or may be distributed in different regions. The plurality of computing devices included in the processing unit 801 may be distributed in a same AZ, or may be distributed in different AZs. Similarly, the plurality of computing devices included in the processing unit 801 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the processing unit 801 may be configured to perform any step in the method provided in any one of the foregoing embodiments, and the sending unit 802 may be configured to perform any step in the method provided in any one of the foregoing embodiments. Steps that the processing unit 801 and the sending unit 802 are responsible for implementing may be specified as required, and the processing unit 801 and the sending unit 802 respectively implement different steps in the method provided in any one of the foregoing embodiments, to implement all functions of the authentication apparatus 800.

In this embodiment of this application, the processing unit generates the first permission policy. The sending unit sends the first notification message, and the data access engine obtains the first permission policy based on the first notification message, and associates the first permission policy with the data access units in the data access engine, so that the data access units are associated with the same permission policy. In this way, when any two data access units receive a same data access request of a same user, the two data access units perform, according to the permission policy separately associated with the two data access units, authentication on permission of the user to access the data storage system, and obtain a same authentication result, avoiding an authentication conflict.

Refer to FIG. 9. An embodiment of this application provides an authentication system 900. The system 900 is a system to which the method 400 shown in FIG. 4, the method 500 shown in FIG. 5, or the method 600 shown in FIG. 6 is applied, and includes a permission policy platform 901 and a data access engine 902.

The permission policy platform 901 is configured to generate a first permission policy.

The permission policy platform 901 is further configured to send a first notification message, where the first notification message indicates that the permission policy platform 901 generates a first permission policy.

The data access engine 902 is configured to obtain the first permission policy based on the first notification message, where the data access engine 902 includes a plurality of data access units.

The data access engine 902 is further configured to associate the first permission policy with the data access units in the data access engine 902, where the plurality of data access units include a first data access unit, and the first data access unit is configured to perform, based on a permission policy associated with the first data access unit, authentication on permission of a user to access a data storage system.

Optionally, for a detailed implementation process in which the permission policy platform 901 generates the first permission policy, refer to the related content in step 401 of the method 400 shown in FIG. 4. Details are not described herein again.

Optionally, for a detailed implementation process in which the permission policy platform 901 sends the first notification message, refer to the related content in step 402 of the method 400 shown in FIG. 4. Details are not described herein again.

Optionally, for a detailed implementation process in which the data access engine 902 obtains the first permission policy, refer to the related content in step 403 of the method 400 shown in FIG. 4. Details are not described herein again.

Optionally, for a detailed implementation process in which the data access engine 902 associates the first permission policy with the data access units in the data access engine 902, refer to the related content in step 404 of the method 400 shown in FIG. 4. Details are not described herein again.

Optionally, the permission policy platform 901 includes a message queue, the message queue is used to store a first log generated when the permission policy platform 901 generates the first permission policy, the first log is used to describe the first permission policy, and the data access engine 902 subscribes to the message queue;
the permission policy platform 901 is configured to send, when storing the first log in the message queue, the first notification message to the data access engine 902 that subscribes to the message queue;
the data access engine 902 is configured to query, based on the first notification message, the message queue for the first log whose log version is later than a latest log version obtained by the data access engine 902; and
the data access engine 902 is further configured to obtain the first permission policy based on the first log.

Optionally, for a detailed implementation process in which the permission policy platform 901 sends the first notification message when storing the first log in the message queue, refer to the related content in step 402 of the method 400 shown in FIG. 4. Details are not described herein again.

Optionally, for a detailed implementation process in which the data access engine 902 obtains the first log and obtains the first permission policy based on the first log, refer to the related content in step 403 of the method 400 shown in FIG. 4. Details are not described herein again.

Optionally, permission policies associated with the data access units in the data access engine 902 include a second permission policy, and the second permission policy is a permission policy generated by the permission policy platform 901.

The permission policy platform 901 is further configured to send a second notification message when deleting the second permission policy, where the second notification message indicates that the permission policy platform 901 deletes the second permission policy.

The data access engine 902 is further configured to dissociate the second permission policy from the data access units in the data access engine based on the second notification message.

Optionally, for a detailed implementation process in which the permission policy platform 901 sends the second notification message, refer to the related content in step 502 of the method 500 shown in FIG. 5. Details are not described herein again.

Optionally, for a detailed implementation process in which the data access engine 902 dissociates the second permission policy from the data access units in the data access engine, refer to the related content in step 503 of the method 500 shown in FIG. 5. Details are not described herein again.

Optionally, the first permission policy is a permission policy obtained by the permission policy platform 901 by modifying a third permission policy, and the third permission policy is a permission policy generated by the permission policy platform 901; or the first permission policy is a new permission policy generated by the permission policy platform 901.

Both the permission policy platform 901 and the data access engine 902 may be implemented by software, or may be implemented by hardware. For example, the following describes an implementation of the permission policy platform 901. Similarly, for an implementation of the data access engine 902, refer to the implementation of the permission policy platform 901.

As an example of a software functional unit, the permission policy platform 901 may include code running on a computing instance. The computing instance may be at least one of computing devices such as a physical host (computing device), a virtual machine, and a container. Further, there may be one or more computing devices. For example, the permission policy platform 901 may include code running on a plurality of hosts/virtual machines/containers. It should be noted that the plurality of hosts/virtual machines/containers used to run the application may be distributed in a same region, or may be distributed in different regions. The plurality of hosts/virtual machines/containers used to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same VPC, or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

As an example of a hardware functional unit, the permission policy platform 901 may include at least one computing device like a server. Alternatively, the permission policy platform 901 may be a device implemented by using an ASIC, a PLD, or the like. The PLD may be implemented by a CPLD, an FPGA, GAL, or any combination thereof.

The plurality of computing devices included in the permission policy platform 901 may be distributed in a same region, or may be distributed in different regions. The plurality of computing devices included in the permission policy platform 901 may be distributed in a same AZ, or may be distributed in different AZs. Similarly, the plurality of computing devices included in the permission policy platform 901 may be distributed in a same VPC, or may be distributed in a plurality of VPCs. The plurality of computing devices may be any combination of computing devices such as a server, an ASIC, a PLD, a CPLD, an FPGA, and GAL.

In this embodiment of this application, when the permission policy platform generates the first permission policy, the permission policy platform sends the first notification message, and the data access engine obtains the first permission policy based on the first notification message, and associates the first permission policy with the data access units in the data access engine, so that the data access units are associated with the same permission policy. In this way, when any two data access units receive a same data access request of a same user, the two data access units perform, according to the permission policy separately associated with the two data access units, authentication on permission of the user to access the data storage system, and obtain a same authentication result, avoiding an authentication conflict.

Refer to FIG. 10, an embodiment of this application provides a computing device 1000. As shown in FIG. 10, the computing device 1000 includes a bus 1002, a processor 1004, a memory 1006, and a communication interface 1008. The processor 1004, the memory 1006, and the communication interface 1008 communicate with each other through the bus 1002. The computing device 1000 may be a server or a terminal device. It should be understood that a quantity of processors and a quantity of memories in the computing device 1000 are not limited in this application.

The bus 1002 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of indication, the bus is indicated by only one line in FIG. 10. However, it does not indicate that there is only one bus or only one type of bus. The bus 1002 may include a path for information transfer between various components (for example, the memory 1006, the processor 1004, and the communication interface 1008) of the computing device 1000.

The processor 1004 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The processor 1004 may further include a non-volatile memory (non-volatile memory), for example, a read-only memory (read-only memory, ROM), a flash memory, a hard disk drive (hard disk drive, HDD), or a solid state drive (solid state drive, SSD).

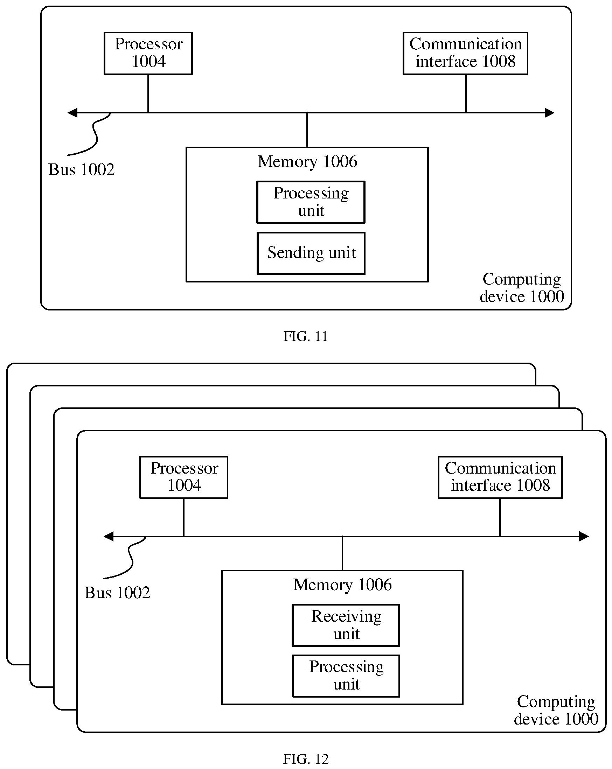

Refer to FIG. 10. The memory 1006 stores executable program code, and the processor 1004 executes the executable program code to separately implement functions of the receiving unit 701 and the processing unit 702 in the apparatus 700 shown in FIG. 7, to implement the method provided in any one of the foregoing embodiments. In other words, the memory 1006 stores instructions used to perform the method provided in any one of the foregoing embodiments. Alternatively,
refer to FIG. 11. The memory 1006 stores executable program code, and the processor 1004 executes the executable program code to separately implement functions of the processing unit 801 and the sending unit 802 in the apparatus 800 shown in FIG. 8, to implement the method provided in any one of the foregoing embodiments. In other words, the memory 1006 stores instructions used to perform the method provided in any one of the foregoing embodiments.

The communication interface 1003 implements communication between the computing device 1000 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

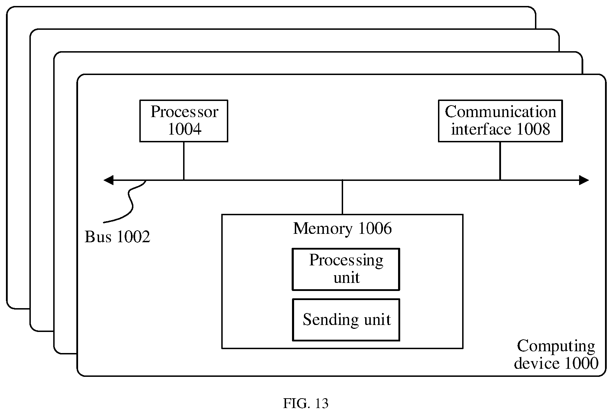

As shown in FIG. 12 or FIG. 13, the computing device cluster includes at least one computing device 1000. A memory 1006 in one or more computing devices 1000 in the computing device cluster may store same instructions for performing the method provided in any one of the foregoing embodiments.

In some possible implementations, the memory 1006 of the one or more computing devices 1000 in the computing device cluster may alternatively separately store some instructions for performing the foregoing method. In other words, a combination of the one or more computing devices 1000 may jointly execute instructions for performing the method according to any one of the foregoing embodiments.

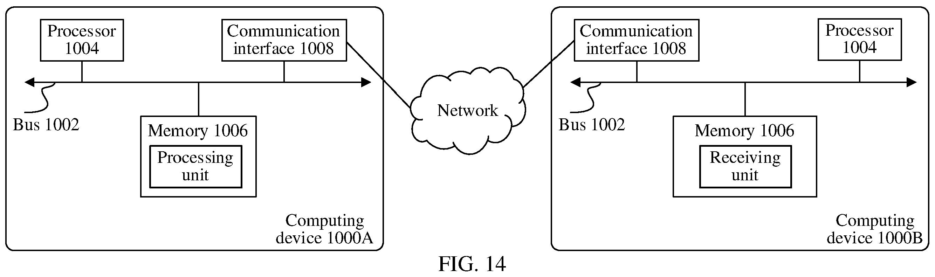

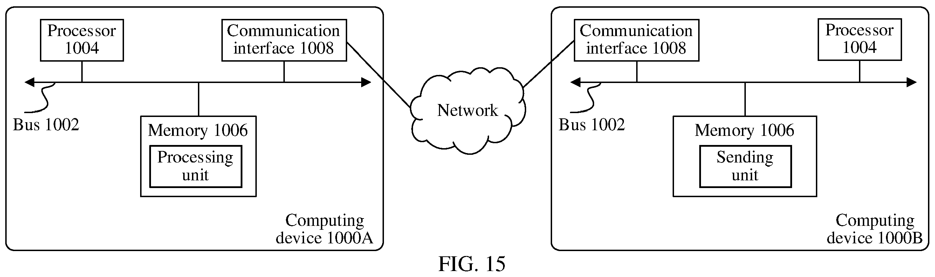

In some possible implementations, the one or more computing devices in the computing device cluster may be connected through a network. The network may be a wide area network, a local area network, or the like. FIG. 14 or FIG. 15 shows a possible implementation. As shown in FIG. 14 or FIG. 15, two computing devices 1000A and 1000B are connected through a network. Specifically, each computing device is connected to the network through a communication interface of the computing device.

In this possible implementation, a memory 1006 in the computing device 1000A stores instructions for performing a function of the processing unit 702 in the embodiment shown in FIG. 7. In addition, a memory 1006 in the computing device 1000B stores instructions for performing a function of the receiving unit 701 in the embodiment shown in FIG. 7. Alternatively,
in this possible implementation, a memory 1006 in the computing device 1000A stores instructions for performing a function of the processing unit 801 in the embodiment shown in FIG. 8. In addition, a memory 1006 in the computing device 1000B stores instructions for performing a function of the sending unit 802 in the embodiment shown in FIG. 8.

It should be understood that functions of the computing device 1000A shown in FIG. 14 or FIG. 15 may alternatively be completed by a plurality of computing devices 1000. Similarly, functions of the computing device 1000B may alternatively be completed by a plurality of computing devices 1000.

An embodiment of this application further provides another computing device cluster. For a connection relationship between computing devices in the computing device cluster, refer to the connection manner of the computing device cluster in FIG. 12 and FIG. 14. Alternatively, for a connection relationship between computing devices in the computing device cluster, refer to the connection manner of the computing device cluster in FIG. 13 and FIG. 15. A difference lies in that a memory 1006 in one or more computing devices 1000 in the computing device cluster may store same instructions for performing the method provided in any one of the foregoing embodiments.

In some possible implementations, the memory 1006 of the one or more computing devices 1000 in the computing device cluster may alternatively separately store some instructions for performing the method provided in any one of the foregoing embodiments. In other words, a combination of the one or more computing devices 1000 may jointly execute instructions for performing the method according to any one of the foregoing embodiments.

It should be noted that memories 1006 of different computing devices 1000 in the computing device cluster may store different instructions to perform some functions of the foregoing authentication system 900. In other words, the instructions stored in the memories 1006 in the different computing devices 1000 can implement functions of one or more apparatuses in the permission policy platform 901 and the data access engine 902.

An embodiment of this application further provides a computer program product including instructions. The computer program product may be software or a program product that includes the instructions and that can run on a computing device or be stored in any usable medium. When the computer program product runs on at least one computing device, the at least one computing device is enabled to perform the method provided in any one of the foregoing embodiments.

An embodiment of this application further provides a computer-readable storage medium. The computer-readable storage medium may be any usable medium accessible by a computing device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid state drive), or the like. The computer-readable storage medium includes instructions, and the instructions instruct the computing device to perform the method provided in any one of the foregoing embodiments.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are only optional embodiments of this application, but are not intended to limit this application. Any modification, equivalent replacement, or improvement made within the principle of this application should fall within the protection scope of this application.

## Claims

1. An authentication method, comprising:
receiving, by a data access engine (101), a first notification message, wherein the first notification message indicates that a permission policy platform (103) generates a first permission policy, and the data access engine (101) comprises a plurality of data access units (1011);
wherein the permission policy platform (103) comprises a message queue (1031), the message queue (1031) is used to store a first log generated when the permission policy platform (103) generates the first permission policy, the first log is used to describe the first permission policy, the data access engine subscribes to the message queue (1031), and the first notification message is a message sent, by the permission policy platform (103) when the first log is stored in the message queue (1031), to the data access engine (101) that subscribes to the message queue (1031);
obtaining (403), by the data access engine (101), the first permission policy based on the first notification message; and
associating (404), by the data access engine (101), the first permission policy with the data access units in the data access engine (101), wherein the plurality of data access units comprise a first data access unit (1011), and the first data access unit (1011) is configured to perform, based on a permission policy associated with the first data access unit (1011), authentication on permission of a user to access a data storage system (102).

2. The method according to claim 1, wherein the obtaining, by the data access engine (101), the first permission policy based on the first notification message comprises:
querying, by the data access engine (101) based on the first notification message, the message queue (1031) for the first log whose log version is later than a latest log version obtained by the data access engine (101); and
obtaining, by the data access engine (101), the first permission policy based on the first log.

3. The method according to claim 1 or 2, wherein permission policies associated with the data access units in the data access engine (101) comprise a second permission policy, the second permission policy is a permission policy generated by the permission policy platform (103), and the method further comprises:
receiving, by the data access engine (101), a second notification message, wherein the second notification message indicates that the permission policy platform (103) deletes the second permission policy; and
dissociating, by the data access engine (101), the second permission policy from the data access units in the data access engine (101) based on the second notification message.

4. The method according to any one of claims 1 to 3, wherein the first permission policy is a permission policy obtained by the permission policy platform (103) by modifying a third permission policy, and the third permission policy is a permission policy generated by the permission policy platform (103); or the first permission policy is a new permission policy generated by the permission policy platform (103).

5. An authentication method, comprising:
generating (401), by a permission policy platform (103), a first permission policy; and
sending (402), by the permission policy platform (103), a first notification message, wherein the first notification message indicates that the permission policy platform (103) generates the first permission policy, the first notification message is further used to trigger a data access engine (101) to obtain the first permission policy and associate the first permission policy with data access units (1011) in the data access engine (101), the data access engine (101) comprises the plurality of data access units (1011), wherein the permission policy platform (103) comprises a message queue (1031), the message queue (1031) is used to store a first log generated when the permission policy platform (103) generates the first permission policy, the first log is used to describe the first permission policy, and the data access engine subscribes to the message queue (1031); the sending (402), by the permission policy platform (103), a first notification message comprises: sending, by the permission policy platform (103) when storing the first log in the message queue (1031), the first notification message to the data access engine (101) that subscribes to the message queue (1031); the plurality of data access units (1011) comprise a first data access unit (1011), and the first data access unit (1011) is configured to perform, based on a permission policy associated with the first data access unit (1011), authentication on permission of a user to access a data storage system (102).

6. The method according to claim 5, wherein the first notification message is used to trigger the data access engine (101) to query the message queue (1031) for the first log whose log version is later than a latest log version obtained by the data access engine (101), and obtain the first permission policy based on the first log.

7. The method according to claim 5 or 6, wherein permission policies associated with the data access units in the data access engine (101) comprise a second permission policy, the second permission policy is a permission policy generated by the permission policy platform (103), and the method further comprises:
sending, by the permission policy platform (103), a second notification message after deleting the second permission policy, wherein the second notification message indicates that the permission policy platform (103) deletes the second permission policy, and the second notification message is further used to trigger the data access engine (101) to dissociate the second permission policy from the data access units in the data access engine (101).

8. An authentication apparatus, wherein the apparatus (800) comprises:
a processing unit (801), configured to generate a first permission policy; and
a sending unit (802), configured to send a first notification message, wherein the first notification message indicates that the processing unit (801) generates the first permission policy, the first notification message is further used to trigger a data access engine (101) to obtain the first permission policy and associate the first permission policy with data access units in the data access engine (101), the data access engine (101) comprises the plurality of data access units, wherein the apparatus (800) comprises a message queue (1031), the message queue (1031) is used to store a first log generated when the processing unit (801) generates the first permission policy, the first log is used to describe the first permission policy, and the data access engine subscribes to the message queue (1031); the sending unit (802) is configured to send, when the first log is stored in the message queue (1031), the first notification message to the data access engine (101) that subscribes to the message queue (1031); the plurality of data access units comprise a first data access unit, and the first data access unit is configured to perform, based on a permission policy associated with the first data access unit, authentication on permission of a user to access a data storage system (102).

9. The apparatus according to claim 8, wherein the first notification message is used to trigger the data access engine (101) to query the message queue (1031) for the first log whose log version is later than a latest log version obtained by the data access engine (101), and obtain the first permission policy based on the first log.

10. The apparatus according to claim 8 or 9, wherein permission policies associated with the data access units in the data access engine (101) comprise a second permission policy, and the second permission policy is a permission policy generated by the processing unit (801); and
the sending unit (802) is further configured to send a second notification message after the processing unit (801) deletes the second permission policy, wherein the second notification message indicates that the processing unit (801) deletes the second permission policy, and the second notification message is further used to trigger the data access engine (101) to dissociate the second permission policy from the data access units in the data access engine (101).

11. The apparatus according to any one of claims 8 to 10, wherein the first permission policy is a permission policy obtained by the processing unit (801) by modifying a third permission policy, and the third permission policy is a permission policy generated by the processing unit (801); or the first permission policy is a new permission policy generated by the processing unit (801).

12. A computer-readable storage medium, storing a computer program, wherein when the computer program is executed by a computing device cluster, the computing device cluster performs the method according to any one of claims 1 to 7.

## Patentansprüche

1. Authentifizierungsverfahren, umfassend:
Empfangen, in einer Datenzugriffs-Engine (101), einer ersten Benachrichtigungsmeldung, wobei die erste Benachrichtigungsmeldung anzeigt, dass eine Berechtigungsrichtlinienplattform (103) eine erste Berechtigungsrichtlinie erzeugt, und wobei die Datenzugriffs-Engine (101) eine Vielzahl von Datenzugriffseinheiten (1011) umfasst;
wobei die Berechtigungsrichtlinienplattform (103) eine Nachrichtenwarteschlange (1031) umfasst, wobei die Nachrichtenwarteschlange (1031) verwendet wird, um ein erstes Protokoll zu speichern, das erzeugt wird, wenn die Berechtigungsrichtlinienplattform (103) die erste Berechtigungsrichtlinie erzeugt, wobei das erste Protokoll verwendet wird, um die erste Berechtigungsrichtlinie zu beschreiben, wobei die Datenzugriffs-Engine bei der Nachrichtenwarteschlange (1031) angemeldet wird, und wobei die erste Benachrichtigungsmeldung eine Meldung ist, die, wenn das erste Protokoll in der Nachrichtenwarteschlange (1031) gespeichert wird, von der Berechtigungsrichtlinienplattform (103) an die Datenzugriffs-Engine (101) gesendet wird, die bei der Nachrichtenwarteschlange (1031) angemeldet ist;
Erhalten (403), in der Datenzugriffs-Engine (101), der ersten Berechtigungsrichtlinie basierend auf der ersten Benachrichtigungsmeldung; und
Assoziieren (404), durch die Datenzugriffs-Engine (101), der ersten Berechtigungsrichtlinie mit den Datenzugriffseinheiten in der Datenzugriffs-Engine (101), wobei die Vielzahl von Datenzugriffseinheiten eine erste Datenzugriffseinheit (1011) umfasst und wobei die erste Datenzugriffseinheit (1011) konfiguriert ist zum Durchführen, basierend auf einer Berechtigungsrichtlinie, die mit der ersten Datenzugriffseinheit (1011) assoziiert ist, einer Authentifizierung anhand einer Berechtigung eines Benutzers zum Zugreifen auf ein Datenspeichersystem (102).

2. Verfahren nach Anspruch 1, wobei das Erhalten, in der Datenzugriffs-Engine (101), der ersten Berechtigungsrichtlinie basierend auf der ersten Benachrichtigungsmeldung umfasst:
Abfragen, durch die Datenzugriffs-Engine (101) basierend auf der ersten Benachrichtigungsmeldung, der Nachrichtenwarteschlange (1031) nach dem ersten Protokoll, dessen Protokollversion später als eine letzte Protokollversion erstellt wurde, die in der Datenzugriffs-Engine (101) erhalten wurde; und
Erhalten, in der Datenzugriffs-Engine (101), der ersten Berechtigungsrichtlinie basierend auf dem ersten Protokoll.

3. Verfahren nach Anspruch 1 oder 2, wobei die Berechtigungsrichtlinien, die mit den Datenzugriffseinheiten in der Datenzugriffs-Engine (101) assoziiert sind, eine zweite Berechtigungsrichtlinie umfassen, wobei die zweite Berechtigungsrichtlinie eine Berechtigungsrichtlinie ist, die von der Berechtigungsrichtlinienplattform (103) erzeugt wird, und wobei das Verfahren ferner umfasst:
Empfangen, in der Datenzugriffs-Engine (101), einer zweiten Benachrichtigungsmeldung, wobei die zweite Benachrichtigungsmeldung anzeigt, dass die Berechtigungsrichtlinienplattform (103) die zweite Berechtigungsrichtlinie löscht; und
Entkoppeln, durch die Datenzugriffs-Engine (101), der zweiten Berechtigungsrichtlinie von den Datenzugriffseinheiten in der Datenzugriffs-Engine (101) basierend auf der zweiten Benachrichtigungsmeldung.

4. Verfahren nach einem der Ansprüche 1 bis 3, wobei die erste Berechtigungsrichtlinie eine Berechtigungsrichtlinie ist, die durch die Berechtigungsrichtlinienplattform (103) erhalten wird, indem eine dritte Berechtigungsrichtlinie modifiziert wird, und wobei die dritte Berechtigungsrichtlinie eine Berechtigungsrichtlinie ist, die von der Berechtigungsrichtlinienplattform (103) erzeugt wird; oder wobei die erste Berechtigungsrichtlinie eine neue Berechtigungsrichtlinie ist, die von der Berechtigungsrichtlinienplattform (103) erzeugt wird.

5. Authentifizierungsverfahren, umfassend:
Erzeugen (401), durch eine Berechtigungsrichtlinienplattform (103), einer ersten Berechtigungsrichtlinie; und
Senden (402) einer ersten Benachrichtigungsmeldung durch die Berechtigungsrichtlinienplattform (103), wobei die erste Benachrichtigungsmeldung anzeigt, dass die Berechtigungsrichtlinienplattform (103) die erste Berechtigungsrichtlinie erzeugt, wobei die erste Benachrichtigungsmeldung ferner verwendet wird, um eine Datenzugriffs-Engine (101) zu veranlassen, die erste Berechtigungsrichtlinie zu erhalten und die erste Berechtigungsrichtlinie mit den Datenzugriffseinheiten (1011) in der Datenzugriffs-Engine (101) zu assoziieren, wobei die Datenzugriffs-Engine (101) die Vielzahl von Datenzugriffseinheiten (1011) umfasst, wobei die Berechtigungsrichtlinienplattform (103) eine Nachrichtenwarteschlange (1031) umfasst, wobei die Nachrichtenwarteschlange (1031) verwendet wird, um ein erstes Protokoll zu speichern, das erzeugt wird, wenn die Berechtigungsrichtlinienplattform (103) die erste Berechtigungsrichtlinie erzeugt, wobei das erste Protokoll verwendet wird, um die erste Berechtigungsrichtlinie zu beschreiben, und wobei die Datenzugriffs-Engine bei der Nachrichtenwarteschlange (1031) angemeldet wird; wobei das Senden (402) einer ersten Benachrichtigungsmeldung durch die Berechtigungsrichtlinienplattform (103) umfasst: Senden, wenn das erste Protokoll in der Nachrichtenwarteschlange (1031) gespeichert wird, der ersten Benachrichtigungsmeldung von der Berechtigungsrichtlinienplattform (103) an die Datenzugriffs-Engine (101), die bei der Nachrichtenwarteschlange (1031) angemeldet ist; wobei die Vielzahl von Datenzugriffseinheiten (1011) eine erste Datenzugriffseinheit (1011) umfasst, und wobei die erste Datenzugriffseinheit (1011) konfiguriert ist zum Durchführen, basierend auf einer Berechtigungsrichtlinie, die mit der ersten Datenzugriffseinheit (1011) assoziiert ist, einer Authentifizierung anhand einer Berechtigung eines Benutzers zum Zugreifen auf ein Datenspeichersystem (102).

6. Verfahren nach Anspruch 5, wobei die erste Benachrichtigungsmeldung verwendet wird, um die Datenzugriffs-Engine (101) zu veranlassen, die Nachrichtenwarteschlange (1031) nach dem ersten Protokoll abzufragen, dessen Protokollversion später als eine letzte Protokollversion erstellt wurde, die in der Datenzugriffs-Engine (101) erhalten wurde, und um die erste Berechtigungsrichtlinie basierend auf dem ersten Protokoll zu erhalten.

7. Verfahren nach Anspruch 5 oder 6, wobei die Berechtigungsrichtlinien, die mit den Datenzugriffseinheiten in der Datenzugriffs-Engine (101) assoziiert sind, eine zweite Berechtigungsrichtlinie umfassen, wobei die zweite Berechtigungsrichtlinie eine Berechtigungsrichtlinie ist, die von der Berechtigungsrichtlinienplattform (103) erzeugt wird, und wobei das Verfahren ferner umfasst:
Senden, durch die Berechtigungsrichtlinienplattform (103), einer zweiten Benachrichtigungsmeldung nach dem Löschen der zweiten Berechtigungsrichtlinie, wobei die zweite Benachrichtigungsmeldung anzeigt, dass die Berechtigungsrichtlinienplattform (103) die zweite Berechtigungsrichtlinie löscht, und wobei die zweite Benachrichtigungsmeldung ferner verwendet wird, um die Datenzugriffs-Engine (101) zu veranlassen, die zweite Berechtigungsrichtlinie von den Datenzugriffseinheiten in der Datenzugriffs-Engine (101) zu entkoppeln.

8. Authentifizierungsvorrichtung, wobei die Vorrichtung (800) umfasst:
eine Verarbeitungseinheit (801), die konfiguriert ist zum Erzeugen einer erste Berechtigungsrichtlinie; und
eine Sendeeinheit (802), die konfiguriert ist zum Senden einer ersten Benachrichtigungsmeldung, wobei die erste Benachrichtigungsmeldung anzeigt, dass die Verarbeitungseinheit (801) die erste Berechtigungsrichtlinie erzeugt, wobei die erste Benachrichtigungsmeldung ferner verwendet wird, um eine Datenzugriffs-Engine (101) zu veranlassen, die erste Berechtigungsrichtlinie zu erhalten und die erste Berechtigungsrichtlinie mit Datenzugriffseinheiten in der Datenzugriffs-Engine (101) zu assoziieren, wobei die Datenzugriffs-Engine (101) die Vielzahl von Datenzugriffseinheiten umfasst, wobei die Vorrichtung (800) eine Nachrichtenwarteschlange (1031) umfasst, wobei die Nachrichtenwarteschlange (1031) verwendet wird, um ein erstes Protokoll zu speichern, das erzeugt wird, wenn die Verarbeitungseinheit (801) die erste Berechtigungsrichtlinie erzeugt, wobei das erste Protokoll verwendet wird, um die erste Berechtigungsrichtlinie zu beschreiben, und wobei die Datenzugriffs-Engine bei der Nachrichtenwarteschlange (1031) angemeldet wird; wobei die Sendeeinheit (802) konfiguriert ist zum Senden, wenn das erste Protokoll in der Nachrichtenwarteschlange (1031) gespeichert wurde, der ersten Benachrichtigungsmeldung an die Datenzugriffs-Engine (101), die bei der Nachrichtenwarteschlange (1031) angemeldet ist; wobei die Vielzahl von Datenzugriffseinheiten eine erste Datenzugriffseinheit umfasst, und wobei die erste Datenzugriffseinheit konfiguriert ist zum Durchführen, basierend auf einer Berechtigungsrichtlinie, die mit der ersten Datenzugriffseinheit assoziiert ist, einer Authentifizierung anhand einer Berechtigung eines Benutzers zum Zugreifen auf ein Datenspeichersystem (102).

9. Vorrichtung nach Anspruch 8, wobei die erste Benachrichtigungsmeldung verwendet wird, um die Datenzugriffs-Engine (101) zu veranlassen, die Nachrichtenwarteschlange (1031) nach dem ersten Protokoll abzufragen, dessen Protokollversion später als eine letzte Protokollversion erstellt wurde, die in der Datenzugriffs-Engine (101) erhalten wurde, und um die erste Berechtigungsrichtlinie basierend auf dem ersten Protokoll zu erhalten.

10. Vorrichtung nach Anspruch 8 oder 9, wobei die Berechtigungsrichtlinien, die mit den Datenzugriffseinheiten in der Datenzugriffs-Engine (101) assoziiert sind, eine zweite Berechtigungsrichtlinie umfassen, und wobei die zweite Berechtigungsrichtlinie eine Berechtigungsrichtlinie ist, die von der Verarbeitungseinheit (801) erzeugt wird; und wobei die Sendeeinheit (802) ferner konfiguriert ist zum Senden einer zweiten Benachrichtigungsmeldung, nachdem die Verarbeitungseinheit (801) die zweite Berechtigungsrichtlinie gelöscht hat, wobei die zweite Benachrichtigungsmeldung anzeigt, dass die Verarbeitungseinheit (801) die zweite Berechtigungsrichtlinie löscht, und wobei die zweite Benachrichtigungsmeldung ferner verwendet wird, um die Datenzugriffs-Engine (101) zu veranlassen, die zweite Berechtigungsrichtlinie von den Datenzugriffseinheiten in der Datenzugriffs-Engine (101) zu entkoppeln.

11. Vorrichtung nach einem der Ansprüche 8 bis 10, wobei die erste Berechtigungsrichtlinie eine Berechtigungsrichtlinie ist, die durch die Verarbeitungseinheit (801) erhalten wird, indem eine dritte Berechtigungsrichtlinie modifiziert wird, und wobei die dritte Berechtigungsrichtlinie eine Berechtigungsrichtlinie ist, die von der Verarbeitungseinheit (801) erzeugt wird; oder wobei die erste Berechtigungsrichtlinie eine neue Berechtigungsrichtlinie ist, die von der Verarbeitungseinheit (801) erzeugt wird.

12. Computerlesbares Speichermedium, in dem ein Computerprogramm gespeichert ist, wobei, wenn das Computerprogramm von einem Computercluster ausgeführt wird, der Computercluster das Verfahren nach einem der Ansprüche 1 bis 7 durchführt.

## Revendications

1. Procédé d'authentification, comprenant :
la réception, par un moteur d'accès aux données (101), d'un premier message de notification, le premier message de notification indiquant qu'une plate-forme de politiques d'autorisation (103) génère une première politique d'autorisation, et le moteur d'accès aux données (101) comprenant une pluralité d'unités d'accès aux données (1011) ;
la plate-forme de politiques d'autorisation (103) comprenant une file d'attente de messages (1031), la file d'attente de messages (1031) étant utilisée pour stocker un premier journal généré lorsque la plate-forme de politiques d'autorisation (103) génère la première politique d'autorisation, le premier journal étant utilisé pour décrire la première politique d'autorisation, le moteur d'accès aux données s'abonnant à la file d'attente de messages (1031), et le premier message de notification étant un message envoyé, par la plate-forme de politiques d'autorisation (103) lorsque le premier journal est stocké dans la file d'attente de messages (1031), au moteur d'accès aux données (101) qui s'abonne à la file d'attente de messages (1031) ;
l'obtention (403), par le moteur d'accès aux données (101), de la première politique d'autorisation sur la base du premier message de notification ; et
l'association (404), par le moteur d'accès aux données (101), de la première politique d'autorisation aux unités d'accès aux données dans le moteur d'accès aux données (101), la pluralité d'unités d'accès aux données comprenant une première unité d'accès aux données (1011), et la première unité d'accès aux données (1011) étant conçue pour effectuer, sur la base d'une politique d'autorisation associée à la première unité d'accès aux données (1011), une authentification sur l'autorisation d'un utilisateur d'accéder à un système de stockage de données (102).

2. Procédé selon la revendication 1, dans lequel l'obtention, par le moteur d'accès aux données (101), de la première politique d'autorisation sur la base du premier message de notification comprend :
l'interrogation, par le moteur d'accès aux données (101) sur la base du premier message de notification, de la file d'attente de messages (1031) pour le premier journal dont la version de journal est ultérieure à une toute dernière version de journal obtenue par le moteur d'accès aux données (101) ; et
l'obtention, par le moteur d'accès aux données (101), de la première politique d'autorisation sur la base du premier journal.

3. Procédé selon la revendication 1 ou 2, les politiques d'autorisation associées aux unités d'accès aux données dans le moteur d'accès aux données (101) comprenant une deuxième politique d'autorisation, la deuxième politique d'autorisation étant une politique d'autorisation générée par la plate-forme de politiques d'autorisation (103), et le procédé comprenant en outre :
la réception, par le moteur d'accès aux données (101), d'un deuxième message de notification, le deuxième message de notification indiquant que la plate-forme de politiques d'autorisation (103) supprime la deuxième politique d'autorisation ; et
la dissociation, par le moteur d'accès aux données (101), de la deuxième politique d'autorisation des unités d'accès aux données dans le moteur d'accès aux données (101) sur la base du deuxième message de notification.

4. Procédé selon l'une quelconque des revendications 1 à 3, dans lequel la première politique d'autorisation est une politique d'autorisation obtenue par la plate-forme de politiques d'autorisation (103) par modification d'une troisième politique d'autorisation, et la troisième politique d'autorisation est une politique d'autorisation générée par la plate-forme de politiques d'autorisation (103) ; ou bien la première politique d'autorisation est une nouvelle politique d'autorisation générée par la plate-forme de politiques d'autorisation (103).

5. Procédé d'authentification, comprenant :
la génération (401), par une plate-forme de politiques d'autorisation (103), d'une première politique d'autorisation ; et
l'envoi (402), par la plate-forme de politiques d'autorisation (103), d'un premier message de notification, le premier message de notification indiquant que la plate-forme de politiques d'autorisation (103) génère la première politique d'autorisation, le premier message de notification étant en outre utilisé pour activer un moteur d'accès aux données (101) afin qu'il obtienne la première politique d'autorisation et associe la première politique d'autorisation à des unités d'accès aux données (1011) dans le moteur d'accès aux données (101), le moteur d'accès aux données (101) comprenant la pluralité d'unités d'accès aux données (1011), la plate-forme de politiques d'autorisation (103) comprenant une file d'attente de messages (1031), la file d'attente de messages (1031) étant utilisée pour stocker un premier journal généré lorsque la plate-forme de politiques d'autorisation (103) génère la première politique d'autorisation, le premier journal étant utilisé pour décrire la première politique d'autorisation, et le moteur d'accès aux données s'abonnant à la file d'attente de messages (1031) ; l'envoi (402), par la plate-forme de politiques d'autorisation (103), d'un premier message de notification comprenant : l'envoi, par la plate-forme de politiques d'autorisation (103) lors du stockage du premier journal dans la file d'attente de messages (1031), du premier message de notification au moteur d'accès aux données (101) qui s'abonne à la file d'attente de messages (1031) ; la pluralité d'unités d'accès aux données (1011) comprenant une première unité d'accès aux données (1011), et la première unité d'accès aux données (1011) étant conçue pour effectuer, sur la base d'une politique d'autorisation associée à la première unité d'accès aux données (1011), une authentification sur l'autorisation d'un utilisateur d'accéder à un système de stockage de données (102).

6. Procédé selon la revendication 5, dans lequel le premier message de notification est utilisé pour activer le moteur d'accès aux données (101) afin qu'il interroge la file d'attente de messages (1031) pour le premier journal dont la version de journal est ultérieure à une toute dernière version de journal obtenue par le moteur d'accès aux données (101), et obtienne la première politique d'autorisation sur la base du premier journal.

7. Procédé selon la revendication 5 ou 6, les politiques d'autorisation associées aux unités d'accès aux données dans le moteur d'accès aux données (101) comprenant une deuxième politique d'autorisation, la deuxième politique d'autorisation étant une politique d'autorisation générée par la plate-forme de politiques d'autorisation (103), et le procédé comprenant en outre :
l'envoi, par la plate-forme de politiques d'autorisation (103), d'un deuxième message de notification après la suppression de la deuxième politique d'autorisation, le deuxième message de notification indiquant que la plate-forme de politiques d'autorisation (103) supprime la deuxième politique d'autorisation, et le deuxième message de notification étant en outre utilisé pour activer le moteur d'accès aux données (101) afin qu'il dissocie la deuxième politique d'autorisation des unités d'accès aux données dans le moteur d'accès aux données (101).

8. Appareil d'authentification, l'appareil (800) comprenant :
une unité de traitement (801), conçue pour générer une première politique d'autorisation ; et
une unité d'envoi (802), conçue pour envoyer un premier message de notification, le premier message de notification indiquant que l'unité de traitement (801) génère la première politique d'autorisation, le premier message de notification est en outre utilisé pour activer un moteur d'accès aux données (101) afin qu'il obtienne la première politique d'autorisation et associe la première politique d'autorisation à des unités d'accès aux données dans le moteur d'accès aux données (101), le moteur d'accès aux données (101) comprenant la pluralité d'unités d'accès aux données, l'appareil (800) comprenant une file d'attente de messages (1031), la file d'attente de messages (1031) étant utilisée pour stocker un premier journal généré lorsque l'unité de traitement (801) génère la première politique d'autorisation, le premier journal étant utilisé pour décrire la première politique d'autorisation, et le moteur d'accès aux données s'abonnant à la file d'attente de messages (1031) ; l'unité d'envoi (802) étant conçue pour envoyer, lorsque le premier journal est stocké dans la file d'attente de messages (1031), le premier message de notification au moteur d'accès aux données (101) qui s'abonne à la file d'attente de messages (1031) ; la pluralité d'unités d'accès aux données comprenant une première unité d'accès aux données, et la première unité d'accès aux données étant conçue pour effectuer, sur la base d'une politique d'autorisation associée à la première unité d'accès aux données, une authentification sur l'autorisation d'un utilisateur d'accéder à un système de stockage de données (102).

9. Appareil selon la revendication 8, dans lequel le premier message de notification est utilisé pour activer le moteur d'accès aux données (101) afin qu'il interroge la file d'attente de messages (1031) pour le premier journal dont la version de journal est ultérieure à une toute dernière version de journal obtenue par le moteur d'accès aux données (101), et obtienne la première politique d'autorisation sur la base du premier journal.

10. Appareil selon la revendication 8 ou 9, dans lequel les politiques d'autorisation associées aux unités d'accès aux données dans le moteur d'accès aux données (101) comprennent une deuxième politique d'autorisation, et la deuxième politique d'autorisation est une politique d'autorisation générée par l'unité de traitement (801) ; et
l'unité d'envoi (802) est en outre conçue pour envoyer un deuxième message de notification après que l'unité de traitement (801) a supprimé la deuxième politique d'autorisation, le deuxième message de notification indiquant que l'unité de traitement (801) supprime la deuxième politique d'autorisation, et le deuxième message de notification étant en outre utilisé pour activer le moteur d'accès aux données (101) afin qu'il dissocie la deuxième politique d'autorisation des unités d'accès aux données dans le moteur d'accès aux données (101).

11. Appareil selon l'une quelconque des revendications 8 à 10, dans lequel la première politique d'autorisation est une politique d'autorisation obtenue par l'unité de traitement (801) par modification d'une troisième politique d'autorisation, et la troisième politique d'autorisation est une politique d'autorisation générée par l'unité de traitement (801) ; ou bien la première politique d'autorisation est une nouvelle politique d'autorisation générée par l'unité de traitement (801).

12. Support de stockage lisible par ordinateur stockant un programme informatique, un groupe de dispositifs informatiques effectuant le procédé selon l'une quelconque des revendications 1 à 7 lorsque le programme informatique est exécuté par le groupe de dispositifs informatiques.
